# EUROPEAN PATENT APPLICATION

(11) **EP 4 436 150 A1**
(43) Date of publication of application: **25.09.2024**
(21) Application number: 23896357.3
(22) Date of filing: 28.10.2023
(51) Int. Cl.: H04M 1/72409

(54) **COMMUNICATION METHOD AND RELATED DEVICE**

(30) Priority: 30.11.2022 CN 202211526428; 30.12.2022 CN 202211743755
(71) Applicant: Huawei Technologies Co., Ltd., Shenzhen, Guangdong 518129 (CN)
(72) Inventor: LI, Danyang, Shenzhen, Guangdong 518129 (CN); WANG, Runzhi, Shenzhen, Guangdong 518129 (CN)
(74) Representative: Gill Jennings & Every LLP
(86) International application number: PCT/CN2023/127416
(87) International publication number: WO 2024/114202

(57) **Abstract**

This application discloses a communication method and a related device. Based on an electronic device in an integrated form formed by a watch and earphones, a user can pair an electronic device 100 (for example, a mobile phone) with each of the watch and the earphones and establish a communication connection by performing one operation. In this way, pairing and connection establishment actions between the electronic device 100 and each of the watch and the earphones are completed at one time, without awareness of the user. In addition, when the user has a plurality of electronic devices 100 at the same time, the electronic device in the integrated form may automatically complete communication connection switching between the plurality of electronic devices 100 based on a usage scenario of the user, thereby simplifying a user operation and improving user experience.

## Description

This application claims priorities to Chinese Patent Application No. 202211526428.0, filed with the China National Intellectual Property Administration on November 30, 2022 and entitled "COMMUNICATION METHOD AND RELATED DEVICE", and to Chinese Patent Application No. 202211743755.1, filed with the China National Intellectual Property Administration on December 30, 2022 and entitled "COMMUNICATION METHOD AND RELATED DEVICE", both of which are incorporated herein by reference in their entireties.

### TECHNICAL FIELD

This application relates to the field of terminal technologies, and in particular, to a communication method and a related device.

### BACKGROUND

With development of terminal technologies, a user may have a plurality of electronic devices (for example, earphones, a watch, and a mobile phone) at the same time. Data exchange may be implemented between these electronic devices by using a communication connection (for example, a Bluetooth communication connection) established between every two electronic devices. However, currently, usage scenarios of the electronic devices are still limited, and user experience is poor.

### SUMMARY

Embodiments of this application provide a communication method and a related device, so that communication connections between different devices can be conveniently switched, thereby simplifying a user operation and improving user experience.

According to a first aspect, an embodiment of this application provides a pairing and connection method, applied to a first device, where the first device includes a first subdevice and earphones, and earphone slots accommodating the earphones are disposed in the first subdevice. The method includes: The first subdevice pairs with a second device and establishes a communication connection to the second device. The first subdevice sends device information of the earphones to the second device based on the communication connection, where the device information of the earphones is used for pairing the second device with the earphones.

The first subdevice may be, for example, a smartwatch, and the device information of the earphones may include a MAC address of the earphones.

According to the method provided in the first aspect, the watch and the earphones may be considered as a whole to pair with a mobile phone. After the mobile phone is paired with the watch, the mobile phone may obtain the MAC address of the earphones from the watch, so that the mobile phone can automatically pair with the earphones based on the MAC address of the earphones, and a user does not need to manually pair the earphones with the mobile phone. The user needs only one pairing process to pair each of the watch and the earphones with the mobile phone.

In a possible implementation, the device information of the earphones is obtained from the earphones by the first subdevice by using an electrical connection formed by contact of a communication electrode of each of the earphones with a communication electrode in each of the earphone slots.

In this way, when the earphones are located in the earphone slots, even if the earphones do not establish a wireless communication connection (for example, a Bluetooth communication connection) to the first subdevice, the earphones and the first subdevice may still communicate based on the foregoing electrical connection.

In a possible implementation, the method further includes: The first subdevice pairs with the earphones based on the device information of the earphones.

In this way, the first subdevice may automatically pair with the earphones based on the obtained device information (for example, the MAC address) of the earphones, without an additional operation of the user. This is convenient and improves user experience.

In a possible implementation, the first subdevice pairs with the earphones when the earphones are located in the earphone slots.

In a possible implementation, the first subdevice pairs with the earphones based on the device information of the earphones specifically includes: If just a single earphone is located in one of the earphone slots, the first subdevice pairs, based on the device information of the earphones, with the single earphone located in the earphone slot. Alternatively, if two earphones are located in the earphone slots, the first subdevice pairs, based on the device information of the earphones, with the two earphones located in the earphone slots.

In this way, the first subdevice may be supported to pair with both the two earphones, and may also be supported to pair with the single earphone located in the earphone slot. After the user subsequently places another type of earphones into the earphone slots, the first subdevice may separately pair with the another type of earphones.

In a possible implementation, when the earphones successfully pair with the second device, the method further includes: The first subdevice detects a first operation of a user. In response to the first operation, the first subdevice controls the earphones to be paired. The earphones pair with a third device.

In this way, after completing pairing with the first device, the earphones may further pair with another device. In other words, the first subdevice and the earphones may pair with a same device, or may pair with different devices. Therefore, application scenarios are wide, and user experience is improved.

In the first aspect, the first device may be an electronic device in an integrated form (for example, an electronic device in an integrated form formed by a watch and earphones). The first subdevice may be an electronic device 200 (for example, a watch). The second device may be an electronic device 100 (for example, a mobile phone). The first operation may be an operation used to control the earphones to be paired. The third device may be an electronic device 400 (for example, a mobile phone).

According to a second aspect, an embodiment of this application provides a call control method, applied to a first device, where the first device includes a first subdevice and earphones, the first subdevice establishes a first communication connection to a second device, the first subdevice establishes a second communication connection to the earphones, and the earphones establish a third communication connection to a third device. The method includes: The first subdevice receives, based on the first communication connection, a first message sent by the second device, where the first message indicates that the second device receives a first incoming call. The first subdevice receives, based on the second communication connection, a second message sent by the earphones, where the second message indicates that the third device receives a second incoming call, and the second message is sent by the third device to the earphones based on the third communication connection. The first subdevice displays a first incoming call interface based on the first message, or displays a second incoming call interface based on the second message.

According to the method provided in the second aspect, when there are incoming calls to both the second device and the third device, the first subdevice may receive an incoming call notification, and the first subdevice may display an incoming call interface of one of the incoming calls, and subsequently support a user in answering the incoming call. In this way, even if the first subdevice does not establish a wireless communication connection to an incoming call device, the incoming call device may send the incoming call notification to the first subdevice by using the earphones. This is convenient and improves user experience.

In a possible implementation, the first incoming call interface is an incoming call interface corresponding to the first incoming call, and after the first subdevice displays the first incoming call interface based on the first message, the method further includes: The first subdevice detects a first operation of a user, where the first operation is used to answer the first incoming call. In response to the first operation, the first subdevice sends a third message to the earphones based on the second communication connection, where the third message includes device information of the second device. The earphones disconnect the third communication connection based on the device information of the second device, and establish a fourth communication connection to the second device. The first subdevice sends a fourth message to the second device based on the first communication connection; or the earphones send a fourth message to the second device based on the fourth communication connection, where the fourth message indicates the second device to get connected to the first incoming call. The earphones receive and play call audio of the first incoming call from the second device based on the fourth communication connection.

In this way, when the second device is in an incoming call ringing process and the third device has an incoming call, the first subdevice may display an incoming call interface of the second device. In this way, the user may answer the incoming call of the second device by operating the incoming call interface.

In a possible implementation, the second incoming call interface is an incoming call interface corresponding to the second incoming call, and after the first subdevice displays a second incoming call interface based on the second message, the method further includes: The first subdevice detects a second operation of a user, where the second operation is used to answer the second incoming call. In response to the second operation, the first subdevice sends a fifth message to the earphones based on the second communication connection. The earphones send a sixth message to the third device based on the fifth message, where the sixth message indicates the third device to get connected to the second incoming call. The earphones receive and play, based on the third communication connection, call audio of the second incoming call from the third device.

In this way, when an incoming call of the second device times out and is not answered and the third device is still in an incoming call ringing process, the first subdevice may cancel display of the incoming call interface of the second device, but display an incoming call interface of the third device. In this way, the user may answer the incoming call of the third device by operating the incoming call interface.

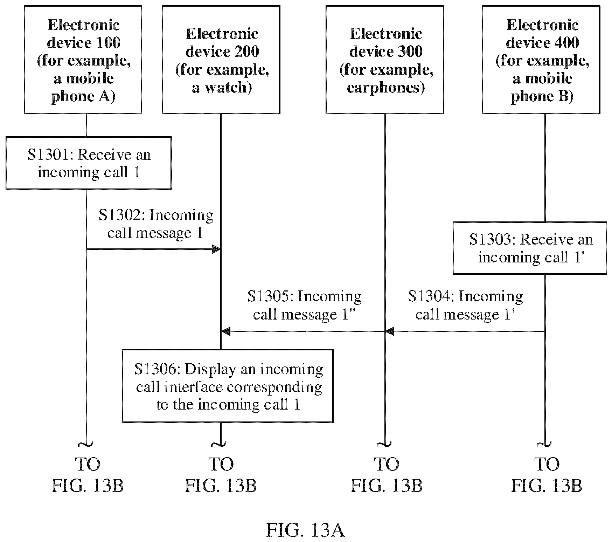

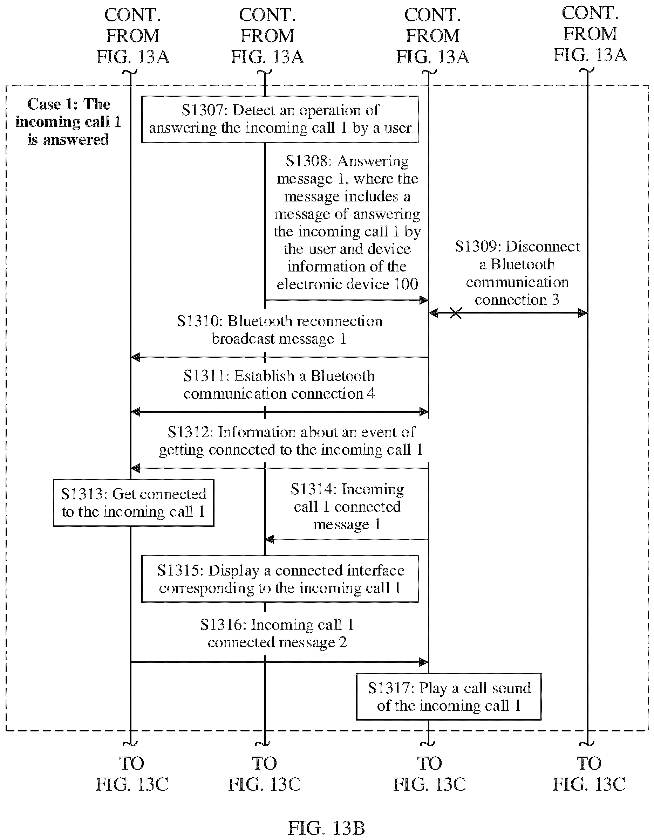

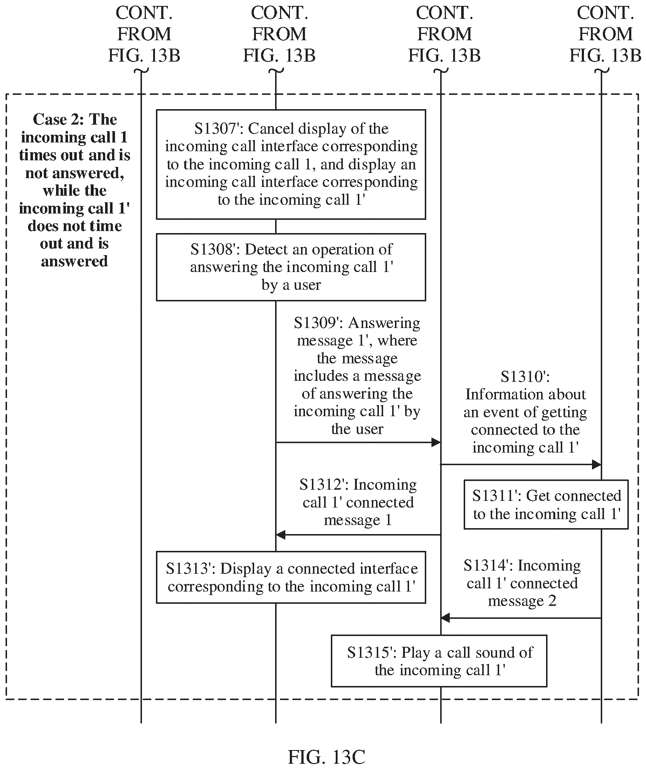

In the second aspect, the first device may be an electronic device in an integrated form (for example, an electronic device in an integrated form formed by a watch and earphones). The first subdevice may be an electronic device 200 (for example, a watch). The second device may be an electronic device 100 (for example, a mobile phone A). The third device may be an electronic device 400 (for example, a mobile phone B). The first message may be an incoming call message 1 in FIG. 13A. The first incoming call may be an incoming call 1 in FIG. 13A. The second message may be an incoming call message 1" in FIG. 13A. The second incoming call may be an incoming call 1' in FIG. 13A. The first incoming call interface may be an incoming call interface corresponding to the incoming call 1. The second incoming call interface may be an incoming call interface corresponding to the incoming call 1'. The first operation may be an operation of answering the incoming call 1 by the user. The third message may be an answering message 1 in FIG. 13B. The fourth message may be information about an event of getting connected to the incoming call 1 in FIG. 13B. The second operation may be an operation of answering the incoming call 1' by the user. The fifth message may be an answering message 1' in FIG. 13C. The sixth message may be information about an event of getting connected to the incoming call 1' in FIG. 13C.

According to a third aspect, an embodiment of this application provides a call control method, applied to a first device, where the first device includes a first subdevice and earphones, the first subdevice establishes a first communication connection to a second device, the first subdevice establishes a second communication connection to the earphones, and the earphones establish a third communication connection to a third device. The method includes: The earphones receive and play, based on the third communication connection, call audio of a first incoming call from the third device. The earphones send a first message to the first subdevice based on the second communication connection, where the first message indicates that the third device gets connected to the first incoming call. The first subdevice displays a first connected interface based on the first message. The first subdevice receives, based on the first communication connection, a second message sent by the second device, where the second message indicates that the second device receives a second incoming call. The first subdevice switches, based on the second message, the first connected interface to a first incoming call interface for display, and detects a first operation of a user, where the first operation is used to answer the second incoming call. In response to the first operation, the first subdevice sends a third message to the earphones based on the second communication connection, where the third message includes device information of the second device. The earphones disconnect the third communication connection from the second device based on the device information of the second device, and establish a fourth communication connection. The first subdevice sends a fourth message to the second device based on the first communication connection; or the earphones send a fourth message to the second device based on the fourth communication connection, where the fourth message indicates the second device to get connected to the second incoming call. The earphones receive and play, based on the fourth communication connection, call audio of the second incoming call from the second device.

According to the method provided in the third aspect, when the earphones answer an incoming call from the third device and the second device has an incoming call, the first subdevice may display an incoming call interface of the second device. When the user answers the incoming call from the second device, the first subdevice may notify the earphones to establish a communication connection to the second device, to answer the incoming call from the second device. In this way, the user does not need to perform a manual operation to switch the communication connection. This is convenient and improves user experience.

In a possible implementation, before the earphones receive and play, based on the third communication connection, call audio of a first incoming call from a third device, the method further includes: The earphones send a fifth message to the first subdevice based on the second communication connection, where the fifth message indicates that the third device receives the first incoming call. The first subdevice displays a second incoming call interface based on the fifth message, and detects a second operation of the user, where the second operation is used to answer the first incoming call. In response to the second operation, the first subdevice sends a sixth message to the earphones based on the second communication connection. The earphones send a seventh message to the third device based on the sixth message, where the seventh message indicates the third device to get connected to the first incoming call.

In this way, even if the first subdevice does not establish a wireless communication connection to an incoming call device, the incoming call device may still send an incoming call notification to the first subdevice by using the earphones, and may perform an operation of answering an incoming call on the first subdevice. This is convenient and improves user experience.

In the third aspect, the first device may be an electronic device in an integrated form (for example, an electronic device in an integrated form formed by a watch and earphones). The first subdevice may be an electronic device 200 (for example, a watch). The second device may be an electronic device 100 (for example, a mobile phone A). The third device may be an electronic device 400 (for example, a mobile phone B). The first incoming call may be an incoming call 1' in FIG. 13A. The first message may be an incoming call 1' connected message 1 in FIG. 13C. The first connected interface may be a connected interface corresponding to the incoming call 1'. The second message may be an incoming call message of the second device. The second incoming call may be an incoming call of the second device. The first incoming call interface may be an incoming call interface corresponding to the incoming call of the second device. The first operation may be an operation of answering the second incoming call. The third message may be, for example, an answering message 1 in FIG. 13B. The fourth message may be information about the event of getting connected to the second incoming call. The fifth message may be an incoming call message of the first incoming call. The second incoming call interface may be an incoming call interface corresponding to the first incoming call. The second operation may be an operation of answering the first incoming call. The sixth message may be, for example, an answering message 1' in FIG. 13C. The seventh message may be information about the event of getting connected to the first incoming call.

According to a fourth aspect, an embodiment of this application provides a call control method, applied to a first device, where the first device includes a first subdevice and earphones, earphone slots accommodating the earphones are disposed in the first subdevice, the earphones are located in the earphone slots, the first subdevice establishes a first communication connection to a second device, and the first subdevice establishes a second communication connection to the earphones. The method includes: The first subdevice receives, based on the first communication connection, a first message sent by the second device, where the first message indicates that the second device receives an incoming call. The first subdevice displays an incoming call interface based on the first message, and sends a second message to the earphones based on the second communication connection, where the second message includes device information of the second device. The earphones detect that the earphones are taken out of the earphone slots, and the earphones establish a third communication connection to the second device based on the device information of the second device. The earphones detect a first operation of a user. In response to the first operation, the earphones send a third message to the second device based on the third communication connection, where the third message indicates the second device to get connected to the incoming call. The earphones receive and play, based on the third communication connection, call audio of the incoming call from the second device.

According to the method provided in the fourth aspect, when the earphones are located in the earphone slots and the second device has an incoming call, the first subdevice may notify the earphones of the incoming call. After the earphones are removed from a case, the earphones may automatically establish a communication connection to the second device, to answer the incoming call of the second device. This simplifies a user operation and improves user experience.

In a possible implementation, after the earphones detect that the earphones are taken out of the earphone slots, the method further includes: The earphones establish a fourth communication connection to the first subdevice. The earphones send a fourth message to the first subdevice based on the fourth communication connection, where the fourth message indicates that the second device gets connected to the incoming call. The first subdevice displays a connected interface based on the fourth message.

In this way, after the incoming call is connected, the first subdevice may also display the connected interface.

In a possible implementation, after the first device displays a connected interface based on the fourth message, the method further includes: The first subdevice detects that the earphones are placed into the earphone slots. The first subdevice sends a fifth message to the earphones, and the earphones send a sixth message to the second device based on the fifth message, where the sixth message indicates the second device to hang up the incoming call. Alternatively, the first subdevice sends a seventh message to the earphones, the earphones disconnect the second communication connection from the second device based on the seventh message, and the second device plays the call audio of the incoming call.

In this way, after the earphones are inserted into the case, the call may be automatically hung up or automatically transferred to the second device for answering based on a set call policy after insertion. This is convenient and improves user experience.

In a possible implementation, after the first device displays a connected interface based on the fourth message, the method further includes: The first subdevice detects a second operation of the user. In response to the second operation, the first subdevice displays a first setting interface, where the first setting interface is used to set volume of the earphones. Alternatively, the first device detects a third operation of the user. In response to the third operation, the first subdevice displays a second setting interface, where the second setting interface is used to set a noise canceling mode of the earphones.

In this way, the user may set a sound and the noise canceling mode for the earphones on the first subdevice.

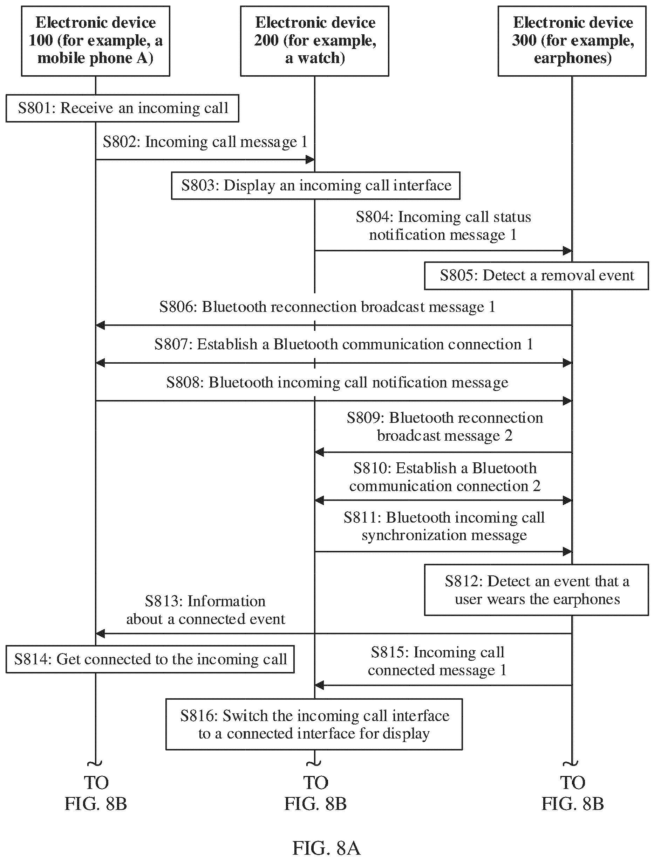

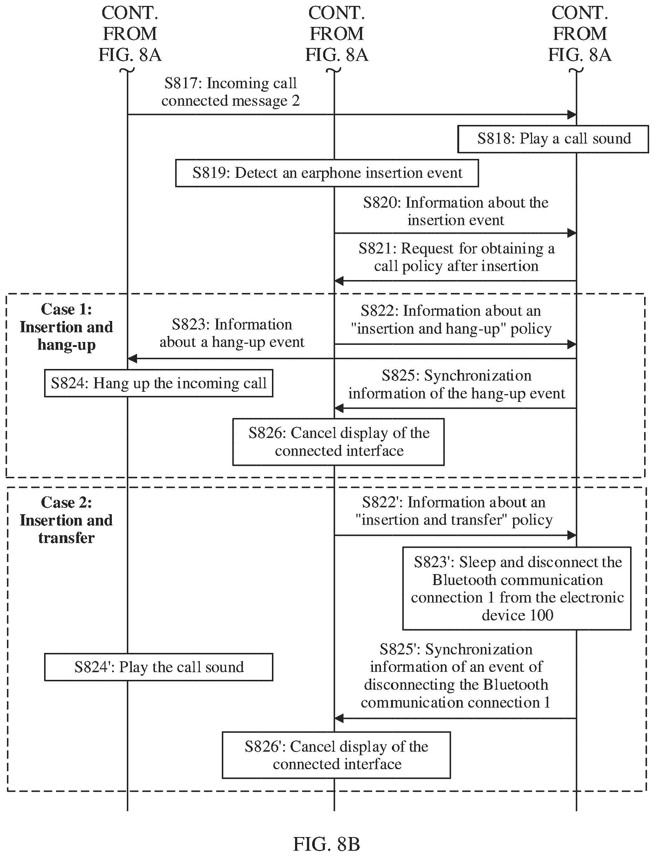

In the fourth aspect, the first device may be an electronic device in an integrated form (for example, an electronic device in an integrated form formed by a watch and earphones). The first subdevice may be an electronic device 200 (for example, a watch). The second device may be an electronic device 100 (for example, a mobile phone A). The first message may be an incoming call message 1 in FIG. 8A. The second message may be an incoming call status notification message 1 in FIG. 8A. The first operation may be, for example, an operation of wearing earphones by the user. The third message may be information about a connected event in FIG. 8A. The fourth message may be an incoming call connected message 1 in FIG. 8A. The fifth message may be information about an "insertion and hang-up" policy in FIG. 8B. The sixth message may be information about a hang-up event in FIG. 8B. The seventh message may be information about an "insertion and transfer" policy in FIG. 8B. The second operation may be an operation of setting a sound by the user. The first setting interface may be an interface for setting the sound. The third operation may be an operation of setting the noise canceling mode by the user. The second setting interface may be an interface for setting the noise canceling mode.

According to a fifth aspect, an embodiment of this application provides a call control method, applied to a first device, where the first device includes a first subdevice and earphones, the first subdevice establishes a first communication connection to the earphones, the earphones establish a second communication connection to a second device, the first subdevice stores a first call record, and the first call record is a call record of the second device. The method includes: The first subdevice detects a first operation of a user on the first call record, where the first operation is used to make an outgoing call to a first number corresponding to the first call record. In response to the first operation, the first subdevice sends a first message to the earphones based on the first communication connection, where the first message indicates the second device to make an outgoing call to the first number. The earphones send a second message to the second device based on the second communication connection, where the second message indicates the second device to make an outgoing call to the first number. The earphones receive and play, based on the second communication connection, call audio of the outgoing call from the second device to the first number.

According to the method in the fifth aspect, when the first subdevice does not establish a communication connection to the second device, after detecting an outgoing call operation of the user, the first subdevice may perform a dialing operation by using the second device that establishes a communication connection to the earphones, to answer a call on the earphones, and complete a task of making an outgoing call. This simplifies a user operation and improves user experience.

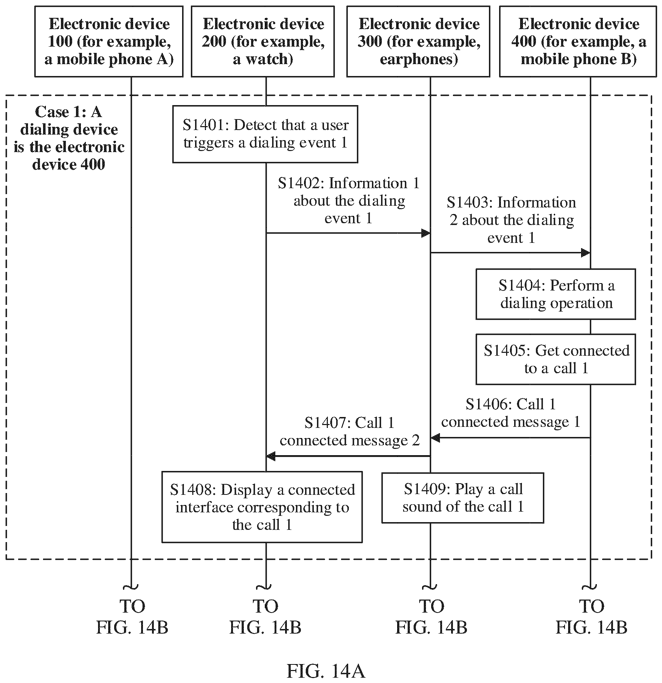

In the fifth aspect, the first device may be an electronic device in an integrated form (for example, an electronic device in an integrated form formed by a watch and earphones). The first subdevice may be an electronic device 200 (for example, a watch). The second device may be an electronic device 400 (for example, a mobile phone B). The first message may be information 1 about a dialing event 1 in FIG. 14A. The second message may be information 2 about the dialing event 1 in FIG. 14A.

According to a sixth aspect, an embodiment of this application provides a call control method, applied to a first device, where the first device includes a first subdevice and earphones, the first subdevice establishes a first communication connection to the earphones, the first subdevice establishes a second communication connection to a second device, the first subdevice stores a first call record, and the first call record is a call record of the second device. The method includes: The first subdevice detects a first operation of a user on the first call record, where the first operation is used to make an outgoing call to a first number corresponding to the first call record. In response to the first operation, the first subdevice sends a first message to the earphones based on the first communication connection, where the first message includes device information of the second device. The earphones establish a third communication connection to the second device based on the device information of the second device. The first subdevice sends a second message to the second device based on the second communication connection; or the earphones send a second message to the second device based on the third communication connection, where the second message indicates the second device to make an outgoing call to the first number. The earphones receive and play, based on the third communication connection, call audio of the outgoing call from the second device to the first number.

According to the method in the sixth aspect, when the first subdevice establishes a communication connection to the second device but the earphones do not establish a communication connection to the second device, after detecting an outgoing call operation of the user, the first subdevice may notify the earphones to establish a communication connection to the second device (namely, a dialing device), to answer a call on the earphones, and complete a task of making an outgoing call. This simplifies a user operation and improves user experience.

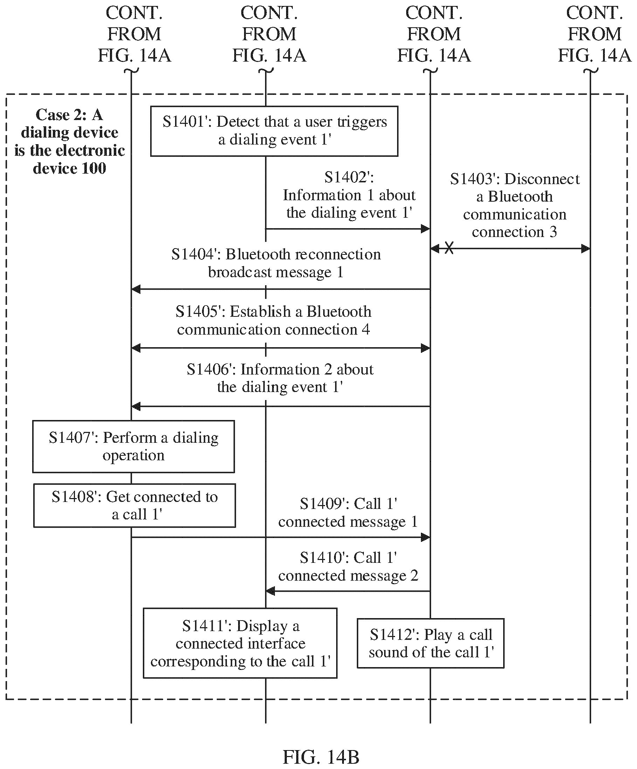

In the sixth aspect, the first device may be an electronic device in an integrated form (for example, an electronic device in an integrated form formed by a watch and earphones). The first subdevice may be an electronic device 200 (for example, a watch). The second device may be an electronic device 100 (for example, a mobile phone A). The first message may be information 1 about a dialing event 1' in FIG. 14B. The second message may be information 2 about the dialing event 1' in FIG. 14B.

According to a seventh aspect, an embodiment of this application provides a call control method, applied to a first device, where the first device includes a first subdevice and earphones, earphone slots accommodating the earphones are disposed in the first subdevice, the earphones are located in the earphone slots, the first subdevice establishes a first communication connection to a second device, the first subdevice establishes a second communication connection to the earphones, the first subdevice stores a first call record, and the first call record is a call record of the second device. The method includes: The first subdevice detects a first operation of a user on the first call record, where the first operation is used to make an outgoing call to a first number corresponding to the first call record. In response to the first operation, the first device sends a first message to the earphones based on the second communication connection, where the first message includes device information of the second device. The earphones detect that the earphones are taken out of the earphone slots, and the earphones establish a third communication connection to the second device based on the device information of the second device. The earphones detect a second operation of the user. In response to the second operation, the earphones send a second message to the second device based on the third communication connection, where the second message indicates the second device to make an outgoing call to the first number. The earphones receive and play, based on the third communication connection, call audio of the outgoing call from the second device to the first number.

According to the method provided in the seventh aspect, when the earphones are located in the earphone slots and the first subdevice detects an outgoing call operation of the user, the first subdevice may notify the earphones of information about an outgoing call dialing event. After the earphones are removed from a case, the earphones may automatically establish a communication connection to the second device (namely, a dialing device), to answer a call on the earphones and complete a task of making an outgoing call. This simplifies a user operation and improves user experience.

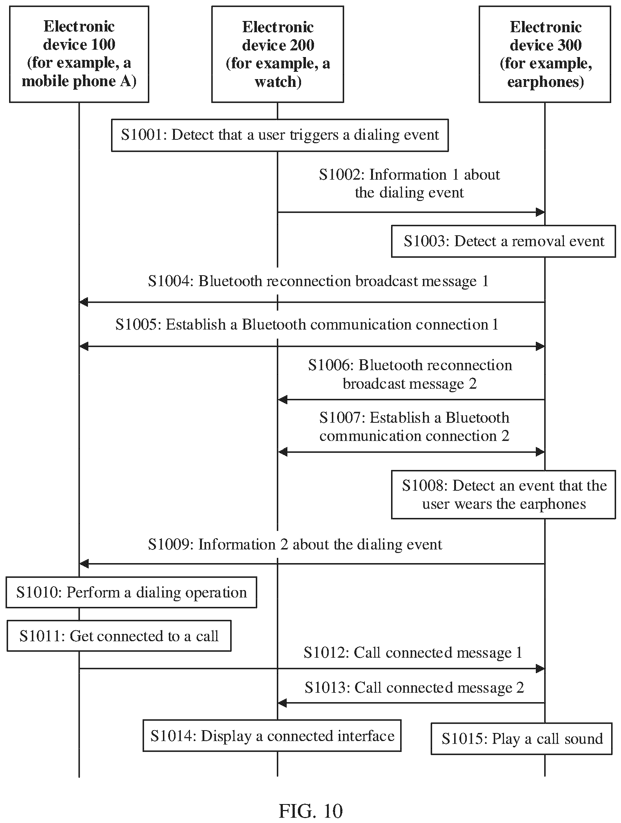

In the seventh aspect, the first device may be an electronic device in an integrated form (for example, an electronic device in an integrated form formed by a watch and earphones). The first subdevice may be an electronic device 200 (for example, a watch). The second device may be an electronic device 100 (for example, a mobile phone A). The first operation may be an operation of triggering a dialing event by the user. The first message may be information 1 about a dialing event in FIG. 10. The second operation may be, for example, an operation of wearing earphones by the user. The second message may be information 2 about the dialing event in FIG. 10.

According to an eighth aspect, an embodiment of this application provides an upgrade method, applied to a first device, where the first device includes a first subdevice and earphones, and the first subdevice establishes a communication connection to the earphones. The method includes: The first subdevice detects an operation of triggering an upgrade by a user. In response to the operation, the first subdevice determines whether the earphones satisfy an upgrade condition, and if the earphones satisfy the upgrade condition, the first subdevice sends a first message to the earphones based on the communication connection, where the first message includes an upgrade package. The earphones start an upgrade based on the upgrade package.

According to the method in the eighth aspect, the user may trigger, by using the first subdevice, the earphones to start the upgrade.

In a possible implementation, earphone slots accommodating the earphones are disposed in the first subdevice, and that the first subdevice determines whether the earphones satisfy an upgrade condition specifically includes: The first subdevice determines whether the earphones are located in the earphone slots, and/or whether a battery level of the earphones exceeds a preset threshold.

In a possible implementation, after the earphones start an upgrade based on the upgrade package, the method further includes: The first subdevice starts the upgrade.

In this way, the user can complete an entire upgrade process of an electronic device 200 and an electronic device 300 by performing one upgrade operation. This is simple and convenient, and improves user experience.

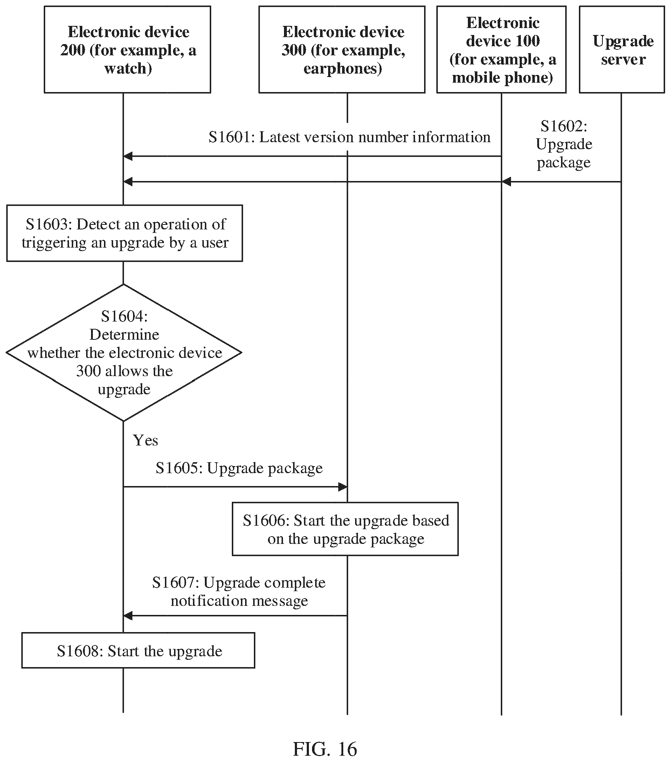

In the eighth aspect, the first device may be an electronic device in an integrated form (for example, an electronic device in an integrated form formed by a watch and earphones). The first subdevice may be the electronic device 200 (for example, a watch). The first message may include an upgrade package sent in step S1605 in FIG. 16.

According to a ninth aspect, an embodiment of this application provides a music playback method, applied to a first device, where the first device includes a first subdevice and earphones. The method includes: The first subdevice detects an operation of playing a first song by a user. In response to the operation, the first subdevice determines whether the first subdevice establishes a first communication connection to the earphones. If the first subdevice establishes the first communication connection to the earphones, the first subdevice sends first audio data to the earphones, where the first audio data is used by the earphones to play the first song. Alternatively, if the first subdevice does not establish the first communication connection to the earphones, the first subdevice displays first prompt information, where the first prompt information prompts the user to establish the first communication connection between the earphones and the first subdevice.

According to the method in the ninth aspect, the first subdevice may determine whether the first subdevice establishes a wireless communication connection to the earphones. If the first subdevice establishes the wireless communication connection to the earphones, the first subdevice may play a song. Alternatively, if the first subdevice does not establish the wireless communication connection to the earphones, the first subdevice may prompt the user to establish the wireless communication connection between the earphones and the first subdevice, so that a song may be played based on the connection.

According to a tenth aspect, an embodiment of this application provides an electronic device, where the electronic device is a first device, the first device includes a first subdevice and earphones, and earphone slots accommodating the earphones are disposed in the first subdevice. The electronic device includes one or more processors and one or more memories. The one or more memories are coupled to the one or more processors. The one or more memories are configured to store computer program code, and the computer program code includes computer instructions. When the one or more processors execute the computer instructions, the electronic device is enabled to perform the method in any one of the first aspect, the second aspect, the third aspect, the fourth aspect, the fifth aspect, the sixth aspect, the seventh aspect, the eighth aspect, the ninth aspect, or the possible implementations thereof.

According to an eleventh aspect, an embodiment of this application provides a computer storage medium. The computer storage medium stores a computer program, and the computer program includes program instructions. When the program instructions are run on an electronic device, the electronic device is enabled to perform the method in any one of the first aspect, the second aspect, the third aspect, the fourth aspect, the fifth aspect, the sixth aspect, the seventh aspect, the eighth aspect, the ninth aspect, or the possible implementations thereof.

According to a twelfth aspect, an embodiment of this application provides a computer program product. When the computer program product runs on a computer, the computer is enabled to perform the method in any one of the first aspect, the second aspect, the third aspect, the fourth aspect, the fifth aspect, the sixth aspect, the seventh aspect, the eighth aspect, the ninth aspect, or the possible implementations thereof.

### BRIEF DESCRIPTION OF DRAWINGS

FIG. 1 is a schematic diagram of a common communication system according to an embodiment of this application;
FIG. 2A is a schematic diagram of an electronic device in an integrated form formed by a watch and earphones according to an embodiment of this application;
FIG. 2B to FIG. 2E are schematic diagrams of earphones being located inside/outside a body of a watch according to an embodiment of this application;
FIG. 2F is a schematic diagram of a communication system according to an embodiment of this application;
FIG. 2G and FIG. 2H are schematic diagrams of connection manners between a group of different electronic devices according to an embodiment of this application;
FIG. 2I is a schematic diagram of a structure of an electronic device in an integrated form according to an embodiment of this application;
FIG. 3 is a schematic flowchart of a communication method in a "pairing and connection" scenario according to an embodiment of this application;
FIG. 4A and FIG. 4B are schematic diagrams of a group of user interfaces displayed after an electronic device in an integrated form is powered on for a first time or is restored to factory settings according to an embodiment of this application;
FIG. 5 is a schematic diagram of a user interface displayed in a process of pairing earphones with a watch according to an embodiment of this application;
FIG. 6A to FIG. 6F are schematic diagrams of a group of user interfaces displayed in a process of pairing a mobile phone with a watch according to an embodiment of this application;
FIG. 7 is a schematic diagram of a user interface displayed in a process of pairing a mobile phone with earphones according to an embodiment of this application;
FIG. 8A and FIG. 8B are a schematic flowchart of a communication method in an incoming call scenario according to an embodiment of this application;
FIG. 9A to FIG. 9C are a group of schematic diagrams of a communication method in an incoming call scenario according to an embodiment of this application;
FIG. 9D to FIG. 9F are schematic diagrams of a group of user interfaces displayed in a process of setting a sound and a noise canceling mode according to an embodiment of this application;
FIG. 9G to FIG. 9I are schematic diagrams of a group of user interfaces displayed in a process of setting a call policy after insertion according to an embodiment of this application;
FIG. 10 is a schematic flowchart of a communication method in an outgoing call scenario according to an embodiment of this application;
FIG. 11A to FIG. 11F are schematic diagrams of a group of user interfaces of a communication method in an outgoing call scenario according to an embodiment of this application;
FIG. 12 is another schematic flowchart of a communication method in an incoming call scenario according to an embodiment of this application;
FIG. 13A to FIG. 13C are another schematic flowchart of a communication method in an incoming call scenario according to an embodiment of this application;
FIG. 14A and FIG. 14B are another schematic flowchart of a communication method in an outgoing call scenario according to an embodiment of this application;
FIG. 15A and FIG. 15B are a schematic flowchart of a communication method in a music playback scenario according to an embodiment of this application; and
FIG. 16 is a schematic flowchart of a communication method in an upgrade scenario according to an embodiment of this application.

### DESCRIPTION OF EMBODIMENTS

The following clearly and completely describes technical solutions in embodiments of this application with reference to the accompanying drawings in embodiments of this application. In the descriptions of embodiments of this application, unless otherwise specified, "/" indicates "or". For example, A/B may indicate A or B. The term "and/or" in this specification only describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

It should be understood that terms "first", "second", and the like in the specification, the claims, and the accompanying drawings of this application are intended to distinguish between different objects, but are not intended to describe a specific order. In addition, the terms "include", "have", and any other variant thereof are intended to cover non-exclusive inclusion. For example, a process, a method, a system, a product, or a device that includes a series of steps or units is not limited to the listed steps or units, but optionally further includes steps or units that are not listed, or optionally further includes another inherent step or unit of the process, the method, the product, or the device.

An "embodiment" mentioned in this application means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in this application may be combined with another embodiment.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. A common representation form of the user interface is a graphical user interface (graphic user interface, GUI), which is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

With development of terminal technologies, a user may have a plurality of electronic devices (for example, earphones, a watch, and a mobile phone) at the same time. A communication connection (for example, a Bluetooth communication connection) may be established between every two of these electronic devices, so that data exchange can be implemented subsequently based on the established communication connection.

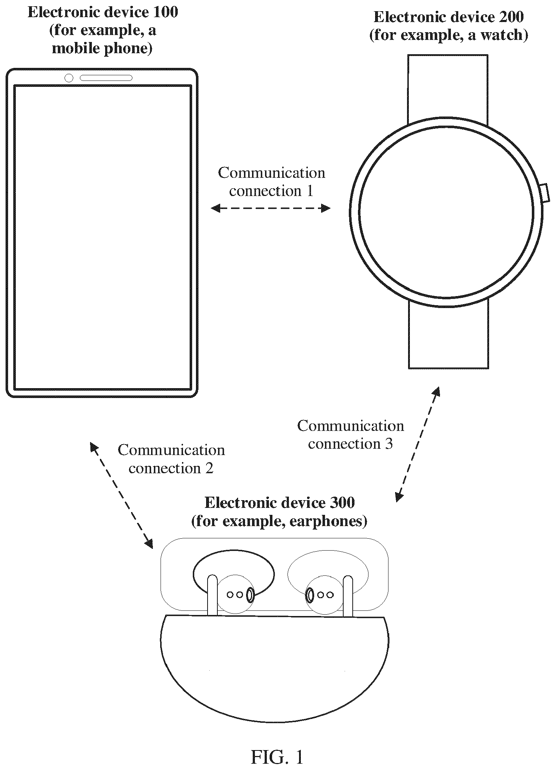

For example, refer to FIG. 1. An example in which an electronic device 100 is a mobile phone, an electronic device 200 is a watch, and an electronic device 300 is earphones is used. Generally, a user needs to manually operate the electronic device 100 to sequentially establish a communication connection (for example, a communication connection 1 and a communication connection 2 shown in FIG. 1) to each of the electronic device 200 and the electronic device 300. If the user wants to establish a communication connection 3 shown in FIG. 1 between the electronic device 300 and the electronic device 200, the user needs to manually operate the electronic device 300 and the electronic device 200 to switch the communication connection. For example, the communication connection 3 is a Bluetooth communication connection. First, the user needs to manually operate the electronic device 300 to enter a pairing mode. Then, after the electronic device 200 searches for and discovers the electronic device 300, the user may select the electronic device 300 on the electronic device 200 for pairing. After the pairing is completed, the electronic device 300 may establish the communication connection 3 with the electronic device 200. In this case, the electronic device 300 switches the communication connection from the communication connection 2 shown in FIG. 1 to the communication connection 3. It can be learned that switching a communication connection needs a manual operation of the user. Each time the communication connection is switched, the user needs to manually perform a procedure of establishing a communication connection. The operation is complex. In addition, in an incoming call or music playback scenario, the electronic device 300 cannot automatically switch the communication connection based on a sound source. As a result, user experience is poor.

Some solutions proposed in the industry partially optimized the foregoing problems. For example, before the communication connection 1 shown in FIG. 1 is established, the communication connection 2 has been established. In this case, when the electronic device 100 establishes the communication connection 1 to the electronic device 200, the electronic device 100 may send device information of the electronic device 300 to the electronic device 200. In this way, when the electronic device 300 establishes the communication connection 3 to the electronic device 200, the electronic device 300 can complete establishment of the communication connection 3 without entering the pairing mode. For another example, in some scenarios (for example, a music playback scenario), the electronic device 300 may switch a communication connection between the electronic device 100 and the electronic device 200 based on a sound source (for example, switch the communication connection from the communication connection 2 to the communication connection 3).

It can be learned that although some of the foregoing solutions simplify operations to some extent, the following problems still exist:

Problem 1: The electronic device 200 and the electronic device 300 are two independent electronic devices instead of one electronic device.

Problem 2: The electronic device 200 and the electronic device 300 need to separately pair with the electronic device 100 and establish a communication connection to the electronic device 100, which cannot be completed through one operation. In addition, when the user has a plurality of electronic devices 100 at the same time, switching of a communication connection cannot be quickly completed.

An embodiment of this application provides an electronic device in an integrated form. The electronic device in the integrated form may be an electronic device formed by fusing two independent electronic devices: an electronic device 200 and an electronic device 300.

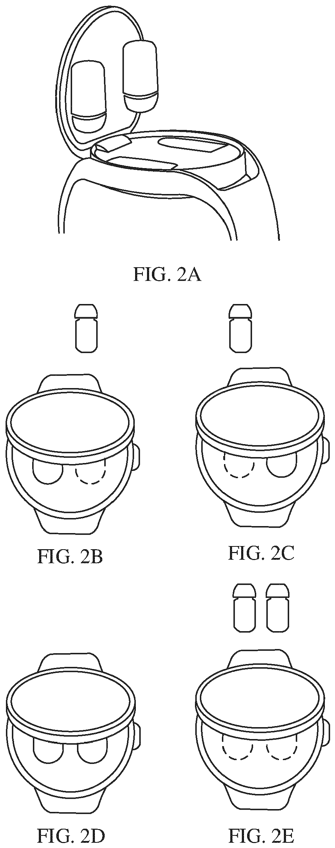

An example in which the electronic device 200 is a smartwatch and the electronic device 300 is true wireless stereo (True Wireless Stereo, TWS) earphones is used. Refer to FIG. 2A. An electronic device shown in FIG. 2A as an example may be an electronic device in an integrated form formed by the smartwatch and the TWS earphones.

It can be easily learned from FIG. 2A that the smartwatch may be used as an earphone case of the TWS earphones. The user may place the TWS earphones into a body of the smartwatch, and a process of placing the earphones in may be referred to as an earphone insertion process. Alternatively, the user may take the TWS earphones out of a body of the smartwatch, and a process of taking the earphones out may be referred to as an earphone removal process.

FIG. 2B to FIG. 2E are schematic diagrams of the TWS earphones being located inside/outside the body of the smartwatch. It can be learned that FIG. 2B shows an example of a scenario in which a left earphone of the TWS earphones are located inside the body of the smartwatch and a right earphone is located outside the body of the smartwatch. FIG. 2C shows an example of a scenario in which the left earphone of the TWS earphones are located outside the body of the smartwatch and the right earphone is located inside the body of the smartwatch. FIG. 2D shows an example of a scenario in which both the left earphone and the right earphone of the TWS earphones are located inside the body of the smartwatch. FIG. 2E shows an example of a scenario in which both the left earphone and the right earphone of the TWS earphones are located outside the body of the smartwatch.

Based on the foregoing electronic device in the integrated form formed by the smartwatch and the TWS earphones, an embodiment of this application provides a communication method. A user can pair an electronic device 100 (for example, a mobile phone) with each of the smartwatch and the TWS earphones and establish a communication connection by performing one operation. In this way, pairing and connection establishment actions between the electronic device 100 and each of the smartwatch and the TWS earphones are completed at one time, without awareness of the user. In addition, when the user has a plurality of electronic devices 100 at the same time, the electronic device in the integrated form may automatically complete communication connection switching between the plurality of electronic devices 100 based on a usage scenario of the user, thereby simplifying a user operation and improving user experience. In addition, the smartwatch and the TWS earphones form one electronic device, so that resource scheduling and control can be performed in a unified manner, which is convenient.

The following first describes a communication system according to an embodiment of this application.

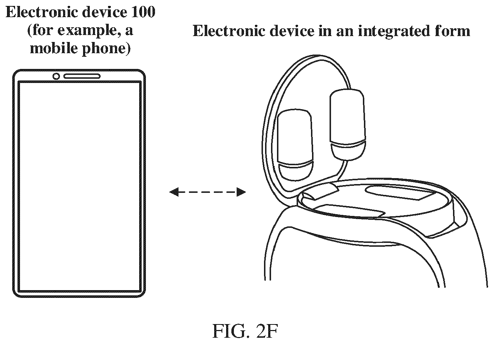

**FIG. 2F** **shows an example of a communication system according to an embodiment of this application.**

As shown in FIG. 2F, the communication system may include a plurality of electronic devices. The plurality of electronic devices may include an electronic device 100 and an electronic device in an integrated form.

All of the plurality of electronic devices included in the communication system may be intelligent terminal devices.

The electronic device 100 may be various types of intelligent terminal devices. For example, the electronic device 100 may be a mobile phone, or may be a tablet computer, a desktop computer, a laptop computer, a handheld computer, a notebook computer, a smart screen, or the like. Specific types and a quantity of the electronic devices 100 are not limited in embodiments of this application.

The electronic device in the integrated form may be an electronic device formed after form integrated is performed on two or more independent electronic devices.

In this embodiment of this application, the electronic device in the integrated form may be an example of an electronic device formed after form integrated is performed on the electronic device 200 (for example, a watch) and the electronic device 300 (for example, earphones).

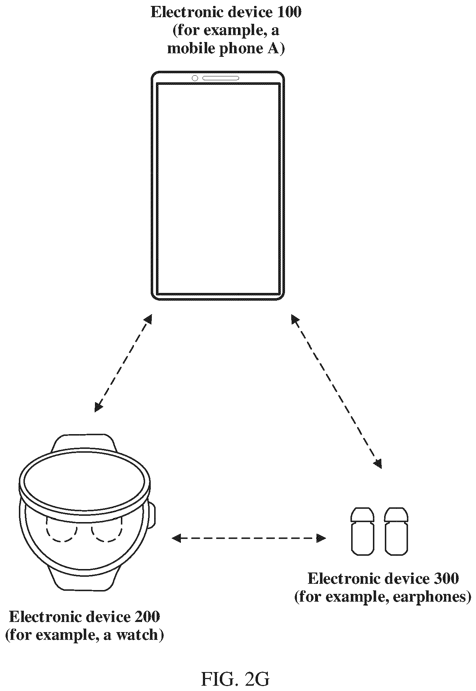

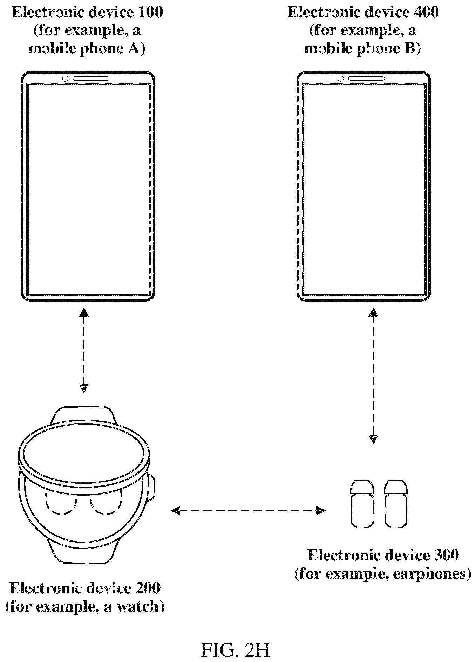

Refer to FIG. 2G. In this embodiment of this application, the electronic device 200 (for example, the watch) and the electronic device 300 (for example, the earphones) may establish a wireless communication connection (for example, a Bluetooth communication connection) to a same electronic device (for example, the electronic device 100). In this case, a connection manner among the electronic device 200, the electronic device 300, and the electronic device 100 may be referred to as a connection manner 1. Refer to FIG. 2H. The electronic device 200 (for example, the watch) and the electronic device 300 (for example, the earphones) may alternatively establish a wireless communication connection (for example, a Bluetooth communication connection) to different electronic devices. For example, the electronic device 200 may establish a wireless communication connection 1 to the electronic device 100, and the electronic device 300 may establish a wireless communication connection 2 to an electronic device (for example, an electronic device 400) different from the electronic device 100. In this case, a connection manner between the electronic device 200, the electronic device 300, the electronic device 100 (for example, a mobile phone A), and the electronic device 400 (for example, a mobile phone B) may be referred to as a connection manner 2.

A Bluetooth (Bluetooth, BT) communication connection may be established between the plurality of electronic devices in the communication system, to perform communication through the Bluetooth communication connection.

Not limited to the foregoing Bluetooth communication connection, the plurality of electronic devices in the communication system may further establish wired connections or other wireless connections, for example, a wireless local area network (wireless local area network, WLAN) connection, a wireless fidelity point-to-point (wireless fidelity point-to-point, Wi-Fi P2P) connection, a near field communication (near field communication, NFC) connection, an infrared (infrared, IR) technology connection, and the like.

In addition, the plurality of electronic devices in the communication system may be connected and communicate with each other in any one of the foregoing manners. This is not limited in embodiments of this application. In other words, the electronic devices in the communication system may establish a network (that is, networking) according to a specific communication protocol and a networking policy, so that the electronic devices in the communication system can communicate with each other.

Different software operating systems (Operating Systems, OS) may be configured for the plurality of electronic devices in the communication system, including but not limited to HarmonyOS^{®}, Android^{®}, iOS^{®}, Windows^{®}, Linux^{®}, and the like. HarmonyOS^{®} is the HarmonyOS system of Huawei. A same software operating system may alternatively be configured for the plurality of electronic devices, for example, HarmonyOS^{®}may be configured for all the electronic devices. When the software operating systems of the plurality of electronic devices are all HarmonyOS^{®}, the communication system may be considered as a hyper terminal.

The following describes a schematic diagram of a structure of an electronic device in an integrated form according to an embodiment of this application.

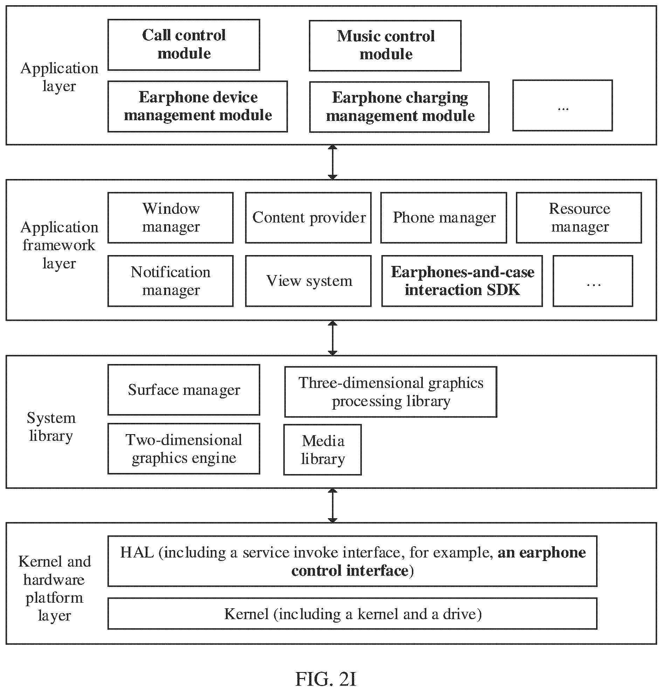

**FIG. 2I** **shows an example of a structure of an electronic device in an integrated form according to an embodiment of this application.**

As shown in FIG. 2I, the electronic device in the integrated form may be an electronic device formed after form integrated is performed on an electronic device 200 (for example, a watch) and an electronic device 300 (for example, earphones). A software system of the electronic device may use a layered architecture, an event-driven architecture, a microkernel architecture, a microservice architecture, or a cloud architecture. In this embodiment of this application, a system with the layered architecture is used as an example for describing a software structure of the electronic device.

In the layered architecture, software is divided into several layers, and each layer has a clear role and task. The layers communicate with each other through a software interface. In some examples, a system of the electronic device is divided into four layers: an application layer, an application framework layer, a system library, and a kernel and a hardware platform layer from top to bottom.

The application layer may include a series of application packages.

As shown in FIG. 2I, the application package may include application programs such as call control, music control, earphone device management, and earphone charging management.

The call control may be configured to provide a call control function in an incoming/outgoing call process, for example, controlling a call status (for example, a connected state or a hang-up state), controlling interface switching in a call process (for example, an incoming call interface is switched to a connected interface, or display of a connected interface is canceled); providing a function of setting a call policy after insertion for the electronic device 300; and the like.

The music control may be configured to provide a control function in a music playback process, for example, playing and pausing music, switching to a next piece of music/a previous piece of music, controlling a volume of music, and the like.

The earphone device management may be configured to provide a function of performing device management on the electronic device 300 (for example, the electronic device 300 is earphones) by the electronic device 200, for example, storing device information (for example, version number information), connection status information, and the like of the electronic device 300.

The earphone charging management may be configured to provide a function of performing charging management on the electronic device 300 by the electronic device 200, for example, monitoring a battery level of the electronic device 300, and receiving input of a battery (not shown in the figure) to supply power to the electronic device 300.

The application framework layer provides an application programming interface (application programming interface, API) and a programming framework for applications at the application layer. The application framework layer includes some predefined functions.

As shown in FIG. 2I, the application framework layer may include a window manager, a content provider, a view system, a phone manager, a resource manager, a notification manager, an earphones-and-case interaction software development kit (Software Development Kit, SDK), and the like.

The window manager may be configured to provide a window management service and manage a window program. For example, the window manager may obtain a size of a display, determine whether a status bar is available, lock a screen, capture the screen, and the like.

The content provider may be configured to store and obtain data, and enable the data to be accessible by an application. The data may include a video, an image, audio, calls made and answered, and the like.

The view system may include a visual control, for example, a control for displaying text or a control for displaying a picture. The view system may be configured to construct an application. A display interface may include one or more views, for example, a view for displaying text and a view for displaying a picture.

The phone manager may be configured to provide a communication function of the electronic device 200, for example, management of a call status (including connecting, hanging up, or the like).

The resource manager provides various resources for an application, such as a localized character string, an icon, a picture, a layout file, and a video file.

The notification manager enables an application to display notification information in a status bar, and may be configured to transmit a notification-type message. The displayed information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an alert tone is issued, the electronic device vibrates, or an indicator blinks.

The earphones-and-case interaction SDK may be configured to provide one or more interfaces for service interaction between the electronic device 200 and the electronic device 300 (for example, the electronic device 300 is the earphones). For example, by using the earphones-and-case interaction SDK, the electronic device 300 may be controlled to be paired, a volume of the electronic device 300 is adjusted, a noise canceling mode of the electronic device 300 is set, information about an insertion event is sent to the electronic device 300 after the insertion event is detected in a call process, information is exchanged with the electronic device 300 in an upgrade process of the electronic device 300, and the like.

The system library may include a plurality of functional modules, for example, a surface manager (surface manager), a media library (Media Library), a three-dimensional graphics processing library (for example, OpenGL ES), a 2D graphics engine (for example, SGL), and the like.

The surface manager is configured to manage a display subsystem and provides integrated of 2D and 3D layers for a plurality of applications.

The media library supports playback and recording in a plurality of commonly used audio and video formats, static image files, and the like. The media library supports a plurality of audio and video coding formats such as MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel and hardware platform layer may include a hardware abstraction layer (Hardware Abstraction Layer, HAL) and a kernel (Kernel) layer.

The hardware abstraction layer runs in user space (User Space), encapsulates a kernel layer driver, and provides an invoke interface to an upper layer. The hardware abstraction layer may include a plurality of service invoke interfaces. For example, in this embodiment of this application, the hardware abstraction layer may provide an earphone control interface, configured to provide an interface for controlling the electronic device 300 (for example, the electronic device 300 is the earphones) by the electronic device 200. The kernel layer is a layer between hardware and software. The kernel layer includes at least a display driver, a Bluetooth driver, and a sensor driver. For example, the kernel layer may include a kernel abstract layer (kernel abstract layer, KAL) and a driver subsystem. The KAL includes one or more kernels, for example, a lightweight internet of things system kernel LiteOS and the like. The driver subsystem may include a hardware driver foundation (Hardware Driver Foundation, HDF). The hardware driver foundation can provide a unified peripheral access capability, driver development, and a management framework. A kernel layer with multiple kernels may select a corresponding kernel for processing according to a system requirement.

A system service layer (not shown in the figure) may further exist between the application framework layer and the kernel and hardware platform layer. The system service layer may be used as a core capability set of a system to provide a service for an application. In some examples, the foregoing earphones-and-case interaction SDK may also exist at the system service layer. A location of the system service layer in a software structure is not limited in embodiments of this application, and may be between the application layer and the application framework layer, or may be between the application framework layer and the system library.

The electronic device 200 may further include a wireless communication module, for example, a Bluetooth communication module, which may be configured to perform wireless communication with another electronic device.

The electronic device 300 may include a call management module, an audio management module, and a charging management module. The call management module, the audio management module, and the charging management module may all be at the application layer shown in FIG. 2I.

The call management module may be configured to provide a call management function in an incoming call or an outgoing call process. For example, in an incoming call scenario, after a wear event and/or a preset gesture is detected, a message is sent to an incoming call device to indicate the incoming call device to get connected to an incoming call. For another example, in a call process, whether to hang up or transfer a call is determined based on a preset call policy.

The audio management module may be configured to provide an audio management function of the electronic device 300. For example, an audio signal is output through an audio output interface, audio data is received through an audio input interface, and the like.

The charging management module may be configured to provide a charging management function of the electronic device 300, for example, receiving charging input and the like.

The electronic device 300 may further include an earphones-and-case communication module, which may be configured to provide a function of communication between the electronic device 300 and the electronic device 200 by using an electrical connection formed by contact of communication electrodes.

The electronic device 300 may further include a wireless communication module, for example, a Bluetooth communication module, which may be configured to perform wireless communication with another electronic device.

It may be understood that FIG. 2I is merely an example, and should not impose any limitation on the foregoing software structure of the electronic device in this embodiment of this application. For example, in some examples, the foregoing software structure of the electronic device may use a layered structure different from that in FIG. 2I, or each layer may further include more or fewer modules, or a combination of a plurality of different modules. This is not limited in embodiments of this application.

Based on the foregoing electronic device in the integrated form formed by the watch and the earphones, the following describes a communication method provided in this application with reference to different application scenarios.

### Pairing and connection scenario

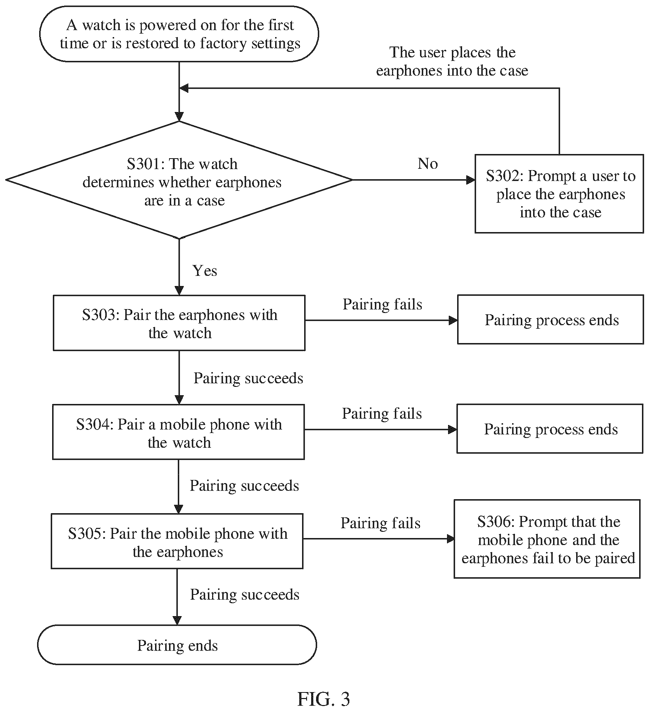

**FIG. 3** **shows an example of a specific procedure of a communication method in the "pairing and connection" scenario according to an embodiment of this application.**

In this embodiment of this application, an example of a condition for triggering execution of the specific procedure in the "pairing and connection" scenario shown in FIG. 3 is that a watch is powered on for the first time or is restored to factory settings. During actual application, the condition for triggering execution of the specific procedure in the "pairing and connection" scenario shown in FIG. 3 may be another condition. This is not limited in embodiments of this application.

**S301:** The watch determines whether earphones are in a case, and if the earphones are not in the case, the following step S302 may be performed; or if the earphones are in the case, the following step S303 may be performed.

After detecting that a user performs an operation of powering on the watch for the first time or an operation of restoring factory settings, the watch may determine whether the earphones are in the case. In this embodiment of this application, whether the earphones are in the case may be determined by using a Hall effect sensor. Specifically, a magnetic field change is caused when the earphones are removed from the case or is inserted into the case, and the Hall effect sensor may determine, based on the magnetic field change, whether the earphones are removed from the case or is inserted into the case.

In this embodiment of this application, because an electronic device is formed after form integrated is performed on the watch and the earphones, and earphone slots accommodating the earphones are disposed in the watch, "the earphones are in the case" may mean that the earphones are located in the earphone slots, and "the earphones are not in the case" may mean that the earphones are not located in the earphone slots.

The earphones may include a left earphone and a right earphone.

If the watch determines that both the left earphone and the right earphone are in the case, the following step S303 may be performed to start a pairing process between the earphones and the watch.

If the watch determines that at least one of the left earphone and the right earphone is not in the case, the following step S302 may be performed to prompt the user to place the earphones into the case.

In this embodiment of this application, before a pairing is completed, the earphones and the watch need to communicate with each other by using an electrical connection formed by contact of communication electrodes (that is, contact of the communication electrode of each of the earphones and the communication electrode in each of the earphone slots), for example, by using a universal asynchronous receiver/transmitter (Universal Asynchronous Receiver/Transmitter, UART). Therefore, in the entire pairing process, the earphones need to be kept in the case, so that the earphones can be in contact with a URAT contact, and the earphones and the watch can communicate with each other. In some examples, in the entire pairing process, the watch further needs to be in a closed-cover state. For example, during product design, the earphones may be attached to a watch cover of the watch. In this case, when the watch is in an open-cover state, the earphones are also attached to the open watch cover. In this case, it is equivalent that the earphones are outside the case. Therefore, in this case, the watch needs to be in the closed-cover state.

In this embodiment of this application, whether the watch is in the closed-cover state or the open-cover state may be determined based on an open-closed state of a buckle on the watch. If the buckle on the watch is in the closed state, it indicates that the watch is in the closed-cover state. If the buckle on the watch is in the open state, it indicates that the watch is in the open-cover state.

It should be noted that, in this embodiment of this application, the watch may determine whether the earphones are inserted into the case or is removed from the case. In some examples, the earphones may also determine whether the earphones are removed from the case or inserted into the case. That the earphones may determine whether the earphones are removed from the case or inserted into the case may be implemented by using the Hall effect sensor.

**S302:** The watch prompts the user to place the earphones into the case.

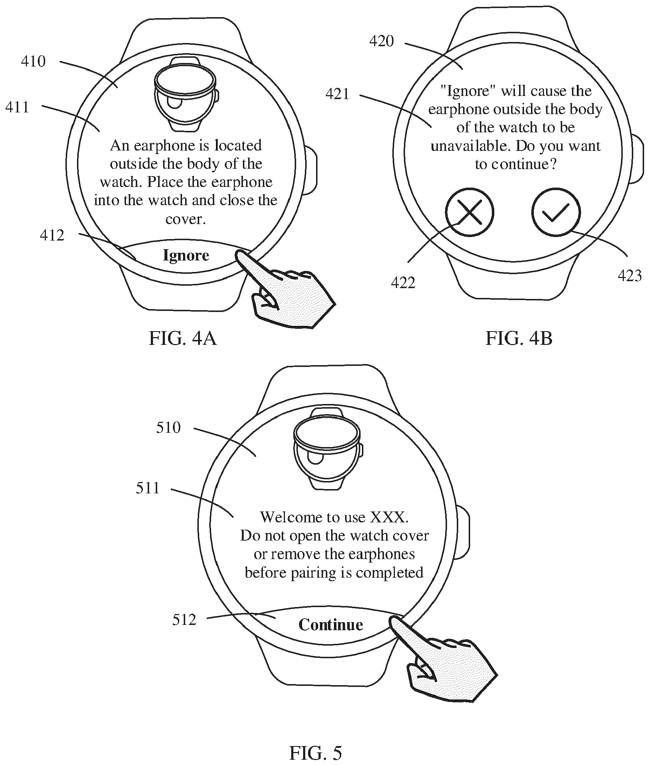

That the watch prompts the user to place the earphones into the case may be that the watch displays a user interface 410 shown in FIG. 4A as an example.

Refer to FIG. 4A. The user interface 410 may include prompt information 411 (for example, "An earphone is currently located outside the body of the watch. Place the earphone into the watch and close the cover. If this step is ignored, the earphone outside the body of the watch will be unavailable") and an option 412 (for example, an "ignore" option).

If the user places the earphone outside the body of the watch into the case after seeing the foregoing prompt information 411, after the watch detects that both the left earphone and the right earphone are in the case, the following step S303 may be performed to start the pairing process between the earphones and the watch.

If the watch detects an operation (for example, a tap operation) of the user on the option 412 (for example, the "ignore" option), in response to the operation, the watch may display a user interface 420 shown in FIG. 4B as an example.

Refer to FIG. 4B. The user interface 430 may include prompt information 421 (for example, "Selecting 'ignore' will cause the earphone outside the body of the watch to be unavailable. Do you want to continue?"), an option 422, and an option 423.

If the watch detects an operation (for example, a tap operation) of the user on the option 422, in response to the operation, the watch may return to display a user interface shown in FIG. 4A, to prompt the user to place the earphones into the case.

If the watch detects an operation (for example, a tap operation) of the user on the option 423, in response to the operation, the watch may start a pairing process with earphones in the case. It is easy to understand that, if neither the left earphone nor the right earphone is in the case, after detecting the operation (for example, the tap operation) of the user on the option 423, the watch cannot start the pairing process between the earphones and the watch. In this case, the watch may also display prompt information, to prompt the user that the pairing process between the earphones and the watch cannot be started because neither of the two earphones are in the case, and the pairing process between the earphones and the watch can be started only after the earphones are placed into the case.

**S303:** Pair the earphones with the watch.

First, before the earphones and the watch are paired, the watch may trigger, by using the electrical connection formed by contact of the communication electrodes, the earphones to enable Bluetooth, and to be paired. In addition, the watch may further obtain device information such as a MAC address of the earphones by using the electrical connection formed by contact of the communication electrodes. Certainly, for the electronic device in the integrated form formed by the watch and the earphones, the device information such as the MAC address of the earphones may alternatively be written into the watch from a factory, and does not need to be actively obtained by the watch.

Then, when the earphones and the watch are paired, the watch may initiate a pairing to the earphones, and the earphones may feed back a pairing success message to the watch. Specifically, the watch may send a pairing request to the earphones based on the stored MAC address of the earphones by using the electrical connection formed by contact of the communication electrodes. The pairing request may include a MAC address of the watch. The earphones may receive the pairing request by using the electrical connection formed by contact of the communication electrodes, and feed back a pairing success message to the watch. The message may include the MAC address of the earphones. In this case, the earphones and the watch complete the pairing. In this way, because the watch knows the MAC address of the earphones before the pairing, the earphones can be automatically paired, thereby simplifying a user operation.

It is easy to understand that, if both the left earphone and the right earphone are in the case, the watch may complete pairing with the two earphones at one time. If one earphone is in the case, the watch may first pair with the earphone. After detecting that the other earphone is placed into the case, the watch may pair with the other earphone.

**S304:** Pair a mobile phone with the watch.

Before the mobile phone and the watch are paired, the watch may display a user interface 510 shown in FIG. 5 as an example. The user interface may include prompt information 511 (for example, "Welcome to use XXX. Do not open the watch cover or remove the earphones before pairing is completed") and an option 512 (for example, a "continue" option). The prompt information 511 may be used to prompt the user not to open the watch cover or remove the earphones before a pairing process is completed, and the option 512 may be used to perform the pairing process. For example, the watch may detect an operation (for example, a tap operation) of the user on the option 512, and in response to the operation, the watch may start the pairing process.

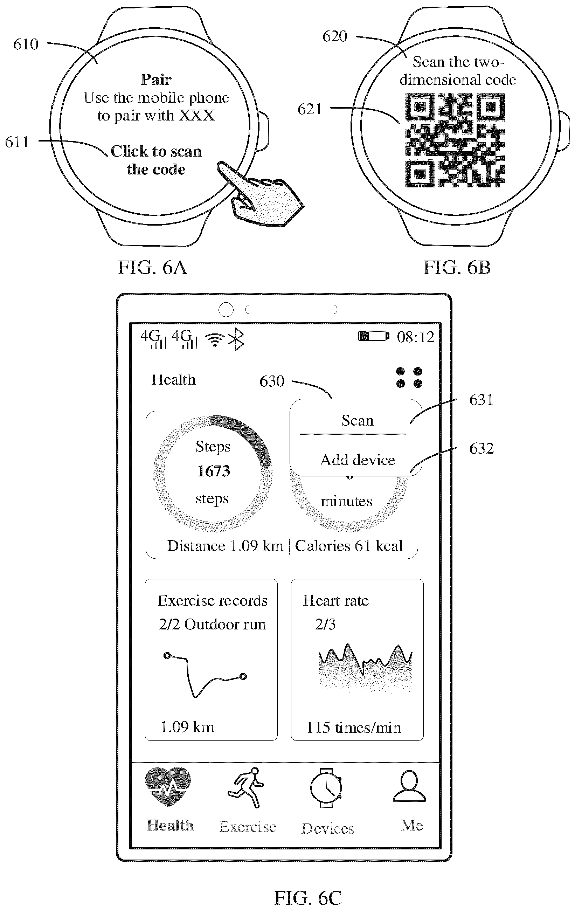

After detecting the operation of the user on the option 512 shown in FIG. 5, the watch may display a user interface 610 shown in FIG. 6A as an example.

Refer to FIG. 6A, the user interface 610 may be configured to prompt the user to pair the mobile phone with the watch. In some examples, the user interface 610 may include an option 611 (for example, a "tap to scan" option). The watch may detect an operation (for example, a tap operation) of the user on the option 611, and in response to the operation, the watch may display a user interface 620 shown in FIG. 6B as an example. The user interface may include a two-dimensional code 621. The two-dimensional code 621 may be used by the user to perform pairing by scanning with the mobile phone. The two-dimensional code 621 may include device information (for example, the MAC address, a device model, and a device name of the watch) of the watch. By scanning the two-dimensional code 621, the mobile phone may obtain the device information of the watch, so that the mobile phone may pair with the watch based on the device information.

Optionally, the user may also perform an up-slide operation on the user interface 610 shown in FIG. 6A, so that the watch displays the user interface 620 shown in FIG. 6B.

If the user wants to pair the mobile phone with the watch, the user may scan the two-dimensional code 621 shown in FIG. 6B by using the mobile phone.

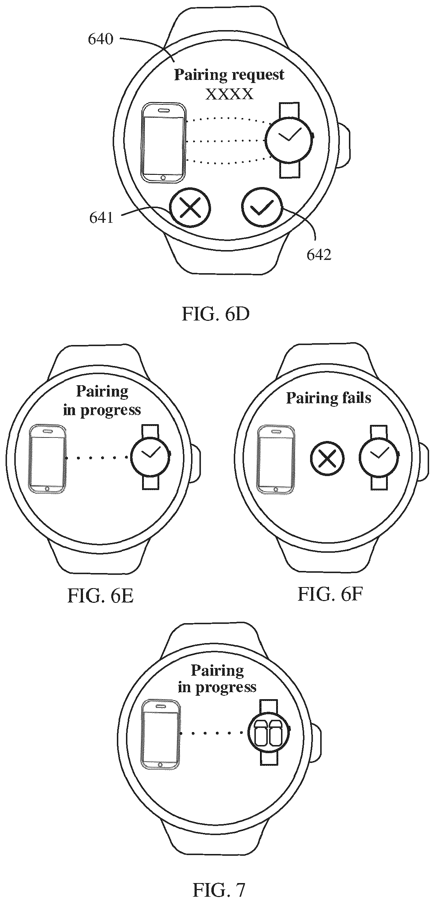

For example, refer to FIG. 6C. A user interface shown in FIG. 6C may be a user interface provided by a sports and health application on the mobile phone. The user interface may include a window 630. The window may include one or more options (for example, an option 631 and an option 632). The option 631 may be used to pair with another device (for example, a watch) by code scanning, and the option 632 may be used to pair with another device (for example, a watch) by manually adding a device. The mobile phone may detect an operation (for example, a tap operation) of the user on the option 631, and in response to the operation, the mobile phone may display a code scanning interface. After successfully scanning the two-dimensional code 621 shown in FIG. 6B, the mobile phone may send a pairing request to the watch through Bluetooth. The pairing request may include device information (for example, a MAC address, a device model, and a device name of the mobile phone) of the mobile phone. After receiving the pairing request sent by the mobile phone, the watch may display a user interface 640 shown in FIG. 6D as an example.

Refer to FIG. 6D, the user interface 640 may include a device name (for example, "XXXX") of a pairing request sender, an option 641, and an option 642. If the watch detects an operation (for example, a tap operation) of the user on the option 641, in response to the operation, a pairing process between the watch and the mobile phone may be terminated. If the watch detects an operation (for example, a tap operation) of the user on the option 642, in response to the operation, the pairing process between the watch and the mobile phone may be started. In addition, the watch may further display a user interface shown in FIG. 6E as an example. The user interface may be used to prompt the user that the mobile phone and the watch are being paired.

If the mobile phone and the watch are successfully paired, a subsequent pairing process between the mobile phone and the earphones may be automatically started, and the user does not need to manually perform an operation to start the pairing process between the mobile phone and the earphones.

If the mobile phone and the watch fail to be paired, a pairing procedure ends. In addition, the watch may further display a user interface shown in FIG. 6F as an example. The user interface may be used to prompt the user that the mobile phone and the watch fail to be paired.

Optionally, after the mobile phone and the watch fail to be paired, the watch may return to display the user interface 510 shown in FIG. 5 as an example, or the user interface shown in FIG. 6A as an example.

There may be a plurality of manners for pairing the mobile phone with the watch, for example, code scanning for pairing, manual addition for pairing, and the like. The manual addition for pairing may be implemented by the user tapping an option 632 in FIG. 6C. The manual addition for pairing may be performed by scanning a to-be-paired device through Bluetooth, to obtain device information of the to-be-paired device. A subsequent process is similar to a process of the foregoing "code scanning for pairing". Details are not described herein again.

S305: Pair the mobile phone with the earphones, and if the pairing fails, the following step S306 is performed; or if the pairing succeeds, an entire pairing process of the mobile phone, the watch, and the earphones is completed.

Specifically, after the mobile phone and the watch are successfully paired, the watch may send the device information (for example, the MAC address, a device model, and a device name of the earphones) of the earphones to the mobile phone. The mobile phone may send a pairing request to the earphones based on the device information of the earphones through Bluetooth. The pairing request may include the device information of the mobile phone (for example, the MAC address, the device model, and the device name of the mobile phone). The earphones receives the pairing request through Bluetooth, and feeds back a pairing success message to the mobile phone. The message may include the MAC address of the earphones. In this case, the earphones and the mobile phone complete the pairing.

In this embodiment of this application, before the mobile phone and the earphones are paired, the watch may further detect whether the earphones are in the case, to control an earphone in the case to be paired. For a specific process of "The watch detects whether the earphones are in the case", refer to the foregoing descriptions of step S301. Details are not described herein again.

In some examples, if both the left earphone and the right earphone are in the case, or the left earphone or the right earphone is not in the case, but the user determines, in the foregoing steps S301 and S302, to ignore an earphone outside the body of the watch (for example, the user taps the option 412 shown in FIG. 4A, or the user taps the option 423 shown in FIG. 4B), after the mobile phone and the watch are successfully paired, the pairing process between the mobile phone and the earphones may be started.

In some other examples, if either the left earphone or the right earphone is not in the case, after the mobile phone and the watch are successfully paired, the watch may display the user interfaces shown in FIG. 4A and FIG. 4B as examples again, to prompt the user to place the earphones into the case. After the watch detects that the user determines to ignore the earphone outside the body of the watch or both the left earphone and the right earphone are placed into the case, the watch may start the pairing process between the mobile phone and the earphones.

In the pairing process between the mobile phone and the earphones, the mobile phone/earphones may send, to the watch, a message indicating that the mobile phone and the earphones are being paired. The watch may display, based on the message, a user interface shown in FIG. 7 as an example. The user interface may be used to prompt the user that the mobile phone and the earphones are being paired.

**S306:** The mobile phone/watch prompts that the mobile phone and the earphones fail to be paired.

When the mobile phone and the earphones fail to be paired, the mobile phone may display a related user interface to prompt the user that the mobile phone and the earphones fail to be paired. Optionally, the mobile phone/earphones may alternatively send, to the earphones, a message indicating that the mobile phone and the earphones fail to be paired, and the watch may alternatively display, based on the message, a related user interface to prompt the user that the mobile phone and the earphones fail to be paired.

In some examples, in a pairing process between the watch and the earphones, and in the pairing process between the mobile phone and the earphones, if the user opens the watch cover (that is, the watch cover is in an open-cover state), the watch may display prompt information, to prompt the user not to open the cover in the pairing process, and keep the watch cover in a closed state.

It should be noted that, in this embodiment of this application, the foregoing pairing processes for pairing the earphones with the watch, pairing the mobile phone with the watch, and pairing the mobile phone with the earphones are merely used as examples. It is easy to understand that an execution sequence of the foregoing pairing the earphones with the watch, pairing the mobile phone with the watch, and pairing the mobile phone with the earphones may be another sequence. This is not limited in embodiments of this application.

For example, the mobile phone and the watch may be paired before the earphones and the watch are paired. In this case, after detecting that the user performs an operation of powering on the watch for the first time or an operation of restoring factory settings, the watch may display a series of user interfaces (for example, the user interfaces shown in FIG. 5, FIG. 6A, FIG. 6B, and FIG. 6D) used to guide the user to pair the mobile phone with the watch. After the mobile phone and the watch are successfully paired, the watch may automatically trigger pairing with the earphones. When an earphone is not in the case, the user interfaces shown in FIG. 4A and FIG. 4B may be displayed. After detecting that the user determines to ignore the earphone not in the case or the user places the earphone not in the case into the case, the watch may start the pairing process between the watch and the earphone. In some examples, when the earphones are paired with the mobile phone, the earphones may not be in the case. After the earphones are removed from the case, if the earphones and the watch are within a specific communication distance range, the earphones may establish a wireless communication connection (for example, a Bluetooth communication connection) to the watch. Therefore, in this case, it needs to be ensured that the earphones establish the wireless communication connection (for example, the Bluetooth communication connection) to the watch, so that the watch may control the earphones to be paired by using the wireless communication connection. Further, the earphones can be paired with the mobile phone only after the earphones are to be paired.

According to the method provided in the embodiment shown in FIG. 3, in a pairing and connection scenario, the user only needs to perform one pairing operation between the mobile phone and the watch, to complete the pairing processes between the earphones and the watch, between the mobile phone and the watch, and between the mobile phone and the earphones, without awareness of the user. This simplifies a user operation and improves user experience. In addition, the watch and the earphones form an electronic device in an integrated form, and are connected in an integrated manner. This improves user experience of a product of a new form.

**The following describes a specific execution process of a communication method provided in an embodiment of this application in an incoming call scenario and an outgoing call scenario when a connection manner among an electronic device 100 (for example, a mobile phone A), an electronic device 200 (for example, a watch), and an electronic device 300 (for example, earphones) is a connection manner 1 shown in** **FIG. 2G****.**

### Incoming call scenario

The embodiment shown in FIG. 8A and FIG. 8B may be executed when the electronic device 100, the electronic device 200, and the electronic device 300 have all been successfully paired, the electronic device 100 establishes a Bluetooth communication connection to the electronic device 200, the electronic device 300 is in a case, and the electronic device 100 receives an incoming call.

**S801:** The electronic device 100 receives the incoming call.

A call application (that is, an application used to answer or make a call) and a sports and health application (that is, an application used to manage the electronic device 200) may be installed on the electronic device 100. After the incoming call is received, the call application may notify the sports and health application that the incoming call is received.

**S802:** The electronic device 100 sends an incoming call message 1 to the electronic device 200 through the Bluetooth communication connection.

The incoming call message 1 may include but is not limited to device information (for example, a MAC address) of the electronic device 100 and a phone number of the incoming call.

After receiving the incoming call, the electronic device 100 may send the incoming call message 1 to the electronic device 200 by using the sports and health application, so that the electronic device 200 may subsequently display an incoming call interface based on the incoming call message 1. In some examples, the electronic device 100 may further send the incoming call message 1 to the electronic device 200 by using a Bluetooth message synchronization service (for example, Synergy).

**S803:** The electronic device 200 displays the incoming call interface.

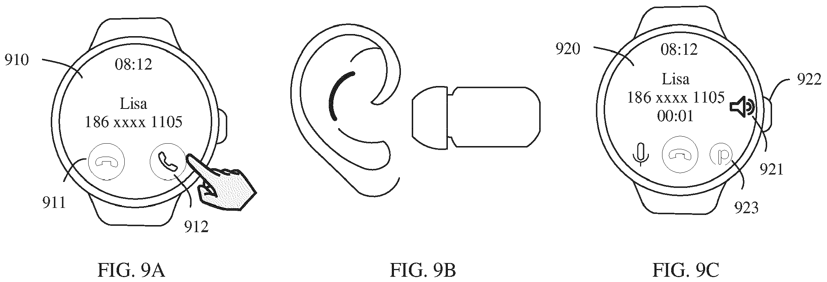

Specifically, after receiving the incoming call message 1 sent by the electronic device 100, the electronic device 200 may display the incoming call interface based on the incoming call message 1. For example, an incoming call interface 910 shown in FIG. 9A as an example may include a phone number (for example, 186xxxx1105) of the incoming call, a contact (for example, Lisa) of the incoming call, an option 911, and an option 912. The option 911 may be used to hang up the incoming call, and the option 912 may be used to get connected to the incoming call.

**S804:** The electronic device 200 sends an incoming call status notification message 1 to the electronic device 300.

The incoming call status notification message 1 may be used to notify the electronic device 300 that an incoming call needs to be answered.

It is easy to understand that, in this embodiment of this application, when the electronic device 200 does not establish a wireless communication connection (for example, a Bluetooth communication connection) to the electronic device 300 (for example, when the electronic device 300 is in the case), the electronic device 200 and the electronic device 300 may communicate based on an electrical connection formed by contact of communication electrodes.

Because the electronic device 300 may be in a sleep state when being in the case, and cannot normally communicate with another device (for example, cannot receive a message sent by the another device), before the foregoing step S804 is performed, the electronic device 200 may trigger the electronic device 300 to switch from the sleep state to an awake state, so that the electronic device 300 can receive a message sent by the electronic device 200.

**S805:** The electronic device 300 detects a removal event.

After detecting the removal event, the electronic device 300 may trigger performing of subsequent steps S806 to S808 and steps S809 to S811, to establish a Bluetooth communication connection to each of the electronic device 100 and the electronic device 200.

**S806:** The electronic device 300 sends a Bluetooth reconnection broadcast message 1.

After detecting the removal event, the electronic device 300 may reconnect to a device that has been previously paired with the electronic device 300. Generally, the electronic device 300 is reconnected to a device that has been paired with the electronic device 300 most recently. For example, the device that has been paired with the electronic device 300 most recently is the electronic device 100. The electronic device 300 may send the Bluetooth reconnection broadcast message 1 to the electronic device 100 based on pairing information (for example, a MAC address of the electronic device 100) stored when the electronic device 300 is paired with the electronic device 100. The Bluetooth reconnection broadcast message 1 may be used to request to establish a Bluetooth communication connection to the electronic device 100. The Bluetooth reconnection broadcast message 1 may include device information (for example, a MAC address of the electronic device 300) of the electronic device 300.

**S807:** The electronic device 100 establishes a Bluetooth communication connection 1 to the electronic device 300.

Specifically, after receiving the Bluetooth reconnection broadcast message 1, the electronic device 100 determines that the device information of the electronic device 300 included in the Bluetooth broadcast message 1 exists in a pairing information list stored in the electronic device 100, and the electronic device 100 establishes the Bluetooth communication connection 1 to the electronic device 300.

**S808:** The electronic device 100 sends a Bluetooth incoming call notification message to the electronic device 300 through the Bluetooth communication connection 1.

The Bluetooth incoming call notification message may include but is not limited to the device information (for example, the MAC address of the electronic device 100) of the electronic device 100. The Bluetooth incoming call notification message may be used to notify the electronic device 300 that the electronic device 100 has an incoming call, or may be used to notify the electronic device 300 that a reconnection succeeds.

**S809:** The electronic device 300 sends a Bluetooth reconnection broadcast message 2.

In this embodiment of this application, the electronic device 200 and the electronic device 200 form an electronic device, and the electronic device 300 has been paired with the electronic device 200 before detecting the removal event. Therefore, after detecting the removal event, the electronic device 300 may reconnect to the electronic device 200 in addition to reconnecting to another electronic device (for example, the electronic device 100). Specifically, the electronic device 300 may send the Bluetooth reconnection broadcast message 2 to the electronic device 200 based on pairing information (for example, a MAC address of the electronic device 200) stored when the electronic device 300 is paired with the electronic device 200. The Bluetooth reconnection broadcast message 2 may be used to request to establish a Bluetooth communication connection to the electronic device 200. The Bluetooth reconnection broadcast message 2 may include the device information (for example, the MAC address of the electronic device 300) of the electronic device 300.

**S810:** The electronic device 200 establishes a Bluetooth communication connection 2 to the electronic device 300.

Specifically, after receiving the Bluetooth reconnection broadcast message 2, the electronic device 200 determines that the device information of the electronic device 300 included in the Bluetooth broadcast message 2 exists in a pairing information list stored in the electronic device 200, and the electronic device 200 establishes the Bluetooth communication connection 2 to the electronic device 300.

**S811:** The electronic device 200 sends a Bluetooth incoming call synchronization message to the electronic device 300 through the Bluetooth communication connection 2.

The Bluetooth incoming call synchronization message may include but is not limited to device information (for example, a MAC address of an incoming call device) of the incoming call device (for example, the electronic device 100). The Bluetooth incoming call synchronization message may be used to notify the electronic device 300 of an incoming call, or may be used to notify the electronic device 300 that a reconnection succeeds.

After successfully reconnecting to each of the electronic device 100 and the electronic device 300, the electronic device 300 may determine, based on the Bluetooth incoming call synchronization message sent by the electronic device 200 and the Bluetooth incoming call notification message sent by the electronic device 100, whether an electronic device that currently establishes the Bluetooth communication connection 1 to the electronic device 300 is the same as the current incoming call device. If the electronic device that currently establishes the Bluetooth communication connection 1 to the electronic device 300 is the same as the current incoming call device, subsequent steps may continue to be performed so that a call sound of the incoming call is played by using the electronic device 300. If the electronic device that currently establishes the Bluetooth communication connection 1 to the electronic device 300 is not the same as the current incoming call device, the electronic device 300 needs to reconnect to the current incoming call device, and after the reconnection succeeds, subsequent steps may continue to be performed, so that a call sound of the incoming call is played by using the electronic device 300. In this way, when a user has a plurality of electronic devices (such as a mobile phone) at the same time, a communication connection may be quickly and automatically switched without a manual operation of the user, thereby improving user experience.

For example, an implementation of determining whether "the electronic device that currently establishes the Bluetooth communication connection 1 to the electronic device 300 is the same as the current incoming call device" may be as follows: The electronic device 300 may compare the device information of the incoming call device included in the Bluetooth incoming call synchronization message sent by the electronic device 200 with the device information of the electronic device 100 included in the Bluetooth incoming call notification message sent by the electronic device 100. If the device information of the incoming call device is the same as the device information of the electronic device 100, it indicates that the electronic device that currently establishes the Bluetooth communication connection 1 to the electronic device 300 and the current incoming call device are a same device. If the device information of the incoming call device is different from the device information of the electronic device 100, it indicates that the electronic device that currently establishes the Bluetooth communication connection 1 to the electronic device 300 and the current incoming call device are not a same device.

It should be noted that an execution time sequence of steps S806 to S808 and steps S809 to S811 is not limited in embodiments of this application. Steps S806 to S808 may be performed before steps S809 to S811, may be performed after steps S809 to S811, or may be performed at the same time with steps S809 to S811.

In some examples, the incoming call status notification message 1 in the foregoing step S804 may include the device information of the electronic device 100. In this way, after the electronic device 300 is removed from the case, the electronic device 300 may reconnect to the electronic device 100 based on the device information of the electronic device 100 included in the incoming call status notification message 1 (that is, steps S806 to S809 are performed). In this way, after the reconnection succeeds, it is not needed to determine whether a device currently reconnected to the electronic device 300 is the incoming call device. In this case, the foregoing step S808 and step S811 are optional.

In some examples, the foregoing steps S809 to S811 may alternatively be performed before the foregoing step S806. To be specific, step S809 is performed when the electronic device 300 is removed from the case, to reconnect to the electronic device 200. After the reconnection succeeds, the electronic device 300 may reconnect to the electronic device 100 based on the device information that is of the electronic device 100 and that is included in the Bluetooth incoming call synchronization message sent by the electronic device 200 (that is, steps S806 to S809 are performed). After the reconnection succeeds, it is not needed to determine whether a device currently reconnected to the electronic device 300 is the incoming call device. In this case, the foregoing step S808 is optional.

In some examples, the electronic device 200 may alternatively detect the removal event. In this case, after detecting the removal event, the electronic device 200 may actively reconnect to the electronic device 300, instead of that the electronic device 300 actively reconnects to the electronic device 200 in the foregoing step S809.

In some examples, if the electronic device 300 fails to reconnect to the electronic device 100, the electronic device 300 may send a reconnection failure message to the electronic device 200. The electronic device 200 may display prompt information (for example, "The earphones fail to be connected. Answer the call on your mobile phone") based on the message, to prompt the user to answer the incoming call on the electronic device 100.

**S812:** The electronic device 300 detects an event that the user wears earphones.

The foregoing step S812 may be used as a condition for triggering performing of the following step S813.

In some examples, the condition for triggering performing of the following step S813 may alternatively be that the electronic device 300 detects the event that the user wears the earphones (for example, earphone wearing event shown in FIG. 9B), and/or an event that the user presses a physical button (for example, a button that is on the electronic device 300 and that is used to answer an incoming call) or triggers a gesture operation (for example, double-tapping the electronic device 300).

In some examples, the condition for triggering performing of the following step S813 may alternatively be that the electronic device 200 detects an operation (for example, a tap operation) of the user on the option 912 shown in FIG. 9A. In this case, the electronic device 200 may send information about a connected event to the electronic device 100 based on a Bluetooth communication connection that the electronic device 200 establishes to the electronic device 100, and the electronic device 300 does not need to perform the following step S813. Alternatively, the electronic device 200 may send an indication message to the electronic device 300 through the Bluetooth communication connection 2, to indicate the electronic device 300 to perform the following step S813.

**S813:** The electronic device 300 sends the information about the connected event to the electronic device 100 through the Bluetooth communication connection 1.

The information about the connected event may include a call connection instruction, for example, an ATA (Attention Adapter) instruction.

**S814:** The electronic device 100 gets connected to the incoming call.

**S815:** The electronic device 300 sends an incoming call connected message 1 to the electronic device 200 through the Bluetooth communication connection 2.

The incoming call connected message 1 may include information indicating that the electronic device 100 gets connected to the incoming call.

**S816:** The electronic device 200 switches, based on the incoming call connected message 1, the incoming call interface to a connected interface for display (for example, a user interface 920 shown in FIG. 9C as an example).

In some examples, after the electronic device 100 gets connected to the incoming call, because the electronic device 100 displays the connected interface, the electronic device 200 may alternatively not display the connected interface. In this way, energy consumption of the electronic device 200 may be reduced.

In some examples, after the electronic device 100 gets connected to the incoming call, the electronic device 100 may send the incoming call connected message 1 to the electronic device 200, so that the electronic device 200 displays the connected interface based on the message. In this case, the electronic device 300 does not need to perform the foregoing step S815.

**S817:** The electronic device 100 sends an incoming call connected message 2 to the electronic device 300 through the Bluetooth communication connection 1.

The incoming call connected message 2 may include a signal of a call sound (namely, call audio) of the incoming call.

**S818:** The electronic device 300 plays the call sound based on the incoming call connected message 2.

The foregoing steps are described by using an example in which the electronic device 300 is in the case. It is easy to understand that if the electronic device 300 is outside the case, and a Bluetooth communication connection is maintained between every two of the electronic device 100, the electronic device 200, and the electronic device 300, when the electronic device 100 receives the incoming call, the foregoing steps S805 to S811 may not be performed. The incoming call status notification message in the foregoing step S804 may include the device information of the electronic device 100. The electronic device 300 may determine, based on the device information of the electronic device 100, that a currently connected device is an incoming call device, and after determining that the electronic device 100 is the incoming call device, the electronic device 300 triggers a subsequent process of getting connected to the incoming call.

**In this embodiment of this application, the electronic device 200 may support the user to set a sound and a noise canceling mode for the electronic device 300.**

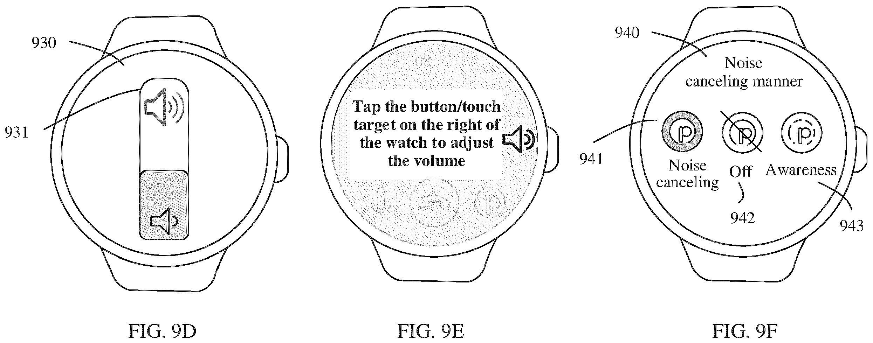

Refer to FIG. 9C. For sound setting, the electronic device 200 may support the user to trigger display of a sound setting interface by pressing a physical button (for example, a button 922) or tapping an interface option (for example, an option 921). A user interface 930 shown in FIG. 9D as an example may be the sound setting interface, and the user may adjust a volume bar 931 to perform sound setting. This is flexible and convenient.

Optionally, to help the user learn how to set the sound, when an incoming call is connected, the electronic device 200 may display prompt information "Tap the button/touch target on the right of the watch to adjust the volume" shown in FIG. 9E as an example.

Still refer to FIG. 9C. For noise canceling mode setting, the electronic device 200 may support the user to tap the interface option (for example, an option 923) to trigger display of a noise canceling mode setting interface. A user interface 940 shown in FIG. 9F as an example may be the noise canceling mode setting interface. The interface may include a plurality of noise canceling manner options (for example, an option 941, an option 942, and an option 943). Each noise canceling manner option corresponds to one noise canceling mode. The user may set a corresponding noise canceling mode by tapping any one of the options. This is flexible and convenient. The option 941 corresponds to a "noise canceling mode", which is implemented by mutual neutralization between a sound wave generated by a noise canceling system and an external noise sound wave, so that an external sound can be completely filtered out. The option 942 corresponds to an "awareness mode", which allows an external sound to enter. For example, an ambient sound can be filtered out, and a human sound can enter. The option 942 corresponds to an "off mode", that is, the "noise canceling mode" and the "awareness mode" are disabled, and a system does not need to perform noise canceling on a sound.

In some examples, the electronic device 300 may alternatively automatically set the noise canceling mode after detecting an event that the user triggers a gesture operation (for example, a triple-tap operation on the electronic device 300).

**In this embodiment of this application, the electronic device 200 may support the user to set a call policy after earphone insertion.**

The call policy after the earphone insertion may include two policies: "insertion and hang-up" and "insertion and transfer". "Insertion and hang-up" may mean that if an insertion event occurs in a process of getting connected to a call, the call is hung up. "Insertion and transfer" may mean that if an insertion event occurs in a process of getting connected to a call, the earphones may stop playing a call sound and transfer the call sound to an incoming call device (for example, the electronic device 100), without hanging up the call, and the user may continue to answer the call.

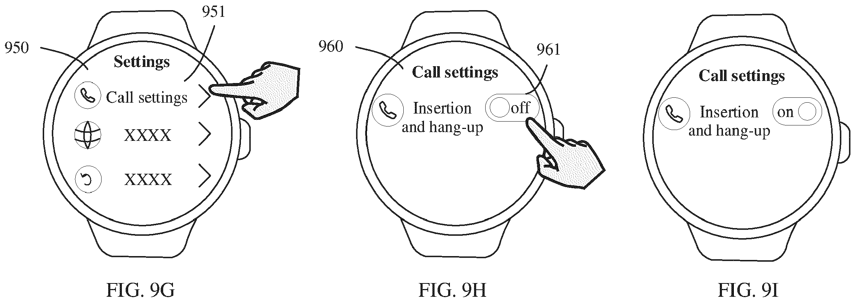

For example, the user may set the call policy after the earphone insertion by using a "settings" menu on the electronic device 200. Refer to FIG. 9G. A user interface 950 shown in FIG. 9G as an example may be a user interface corresponding to the "settings" menu. The user interface may include one or more setting options (for example, an option 951). The option 951 may be used by the user to enter a call policy setting interface to set a call policy. If the user wants to set the call policy, the electronic device 200 may detect an operation (for example, a tap operation) of the user on the option 951. In response to the operation, the electronic device 200 may display a user interface 960 shown in FIG. 9H as an example. The user interface may be the call policy setting interface.

Refer to FIG. 9H. In some examples, the electronic device 200 may consider, by default, that the call policy after the earphone insertion is "insertion and transfer" (that is, an option 961 corresponding to "insertion and hang-up" shown in FIG. 9H is in a disabled state), and save information about the call policy after the earphone insertion as information about an "insertion and transfer" policy.

Still refer to FIG. 9H. If the user wants to set the call policy after the earphone insertion to "insertion and hang-up", the electronic device 200 may detect an operation (for example, a tap operation) of the user on the option 961. In response to the operation, the electronic device 200 may set the option 961 from a disabled state shown in FIG. 9H to an enabled state shown in FIG. 9I, and save information about the call policy after the earphone insertion as information about an "insertion and hang-up" policy.

**S819:** The electronic device 200 detects earphone insertion event.

The earphone insertion event is detected by the electronic device 200 in a process of getting connected to a call.

**S820:** The electronic device 200 sends information about the insertion event to the electronic device 300.

**S821:** The electronic device 300 sends a request for obtaining the call policy after the insertion to the electronic device 200.

In this embodiment of this application, when the information about the call policy after the earphone insertion is set and saved in the electronic device 200, the electronic device 300 may send a request to obtain the call policy after the insertion from the electronic device 300, or the electronic device 200 actively sends the call policy after the insertion to the electronic device 300 after detecting the insertion event.

In some examples, after the information about the call policy after the earphone insertion is set, the electronic device 200 may alternatively actively send the call policy after the earphone insertion to the electronic device 300. In this way, when an insertion event occurs in the process of getting connected to the call, the electronic device 300 does not need to request the electronic device 200 to obtain the call policy after the earphone insertion.

In some examples, the electronic device 300 may alternatively detect the insertion event. In this case, the foregoing steps S819 and S820 may not be performed.

**It is easy to understand that, when the call policy after the insertion is the "insertion and hang-up" policy, the following steps S822 to S826 are performed to hang up a call. Alternatively, when the call policy after the insertion is the "insertion and transfer" policy, the following steps S822' to S826' are performed to transfer a call.**

**The following describes a process of hanging up the call when the call policy after the insertion is the "insertion and hang-up" policy and a process of transferring the call when the call policy after the insertion is the "insertion and transfer" policy.**

**Case 1: The call policy after the earphone insertion is "insertion and hang-up"**

**S822:** The electronic device 200 sends the information about the "insertion and hang-up" policy to the electronic device 300.

The foregoing step S822 may be triggered for performing by the foregoing step S821.

**S823:** The electronic device 300 sends information about a hang-up event to the electronic device 100 through the Bluetooth communication connection 1.

The information about the hang-up event may include a call hang-up instruction, for example, an ATCHUP (Attention Call Hang Up) instruction.

In this embodiment of this application, after the electronic device 300 is inserted into the case, the Bluetooth communication connection 1 may be disconnected after the information about the hang-up event is sent to the electronic device 100.

**S824:** The electronic device 100 hangs up the incoming call based on the information about the hang-up event.

**S825:** The electronic device 300 sends synchronization information of the hang-up event to the electronic device 200.

**S826:** The electronic device 200 cancels display of the connected interface based on the synchronization information of the hang-up event.

In some examples, the foregoing step S825 may be performed by the electronic device 100 instead of the electronic device 300. In other words, after the electronic device 100 hangs up the call, the electronic device 100 may send the information about the hang-up event to the electronic device 200. After the electronic device 200 receives the synchronization information of the hang-up event sent by the electronic device 100, the electronic device 200 may cancel display of the connected interface based on the synchronization information of the hang-up event.

In some examples, the user may alternatively hang up the incoming call on the electronic device 100. In this case, the electronic device 100 may send, to the electronic device 200, indication information for hanging up the incoming call. After receiving the indication information, the electronic device 200 may cancel display of the connected interface. After the incoming call is hung up, the electronic device 300 no longer plays a call sound.

In some other examples, the user may alternatively hang up the incoming call on the electronic device 200. In this case, the electronic device 200 may send, to the electronic device 100, indication information for hanging up the incoming call. After receiving the indication information, the electronic device 100 may hang up the incoming call. After the incoming call is hung up, the electronic device 300 no longer plays a call sound.

**Case 2: The call policy after the earphone insertion is "insertion and transfer"**

**S822':** The electronic device 200 sends the information about the "insertion and transfer" policy to the electronic device 300.

The foregoing step S822' may be triggered for performing by the foregoing step S821.

**S823':** The electronic device 300 sleeps and disconnects the Bluetooth communication connection 1 from the electronic device 100.

**S824':** The electronic device 100 plays the call sound.

In this way, a call may be automatically transferred to the electronic device 100 for answering. To be specific, the electronic device 100 plays the call sound, and the electronic device 300 stops playing the call sound.

**S825':** The electronic device 300 sends, to the electronic device 200, synchronization information of an event of disconnecting the Bluetooth communication connection 1.

**S826':** The electronic device 200 cancels display of the connected interface.

In some examples, the foregoing step S825' may be performed by the electronic device 100 instead of the electronic device 300. In other words, after the electronic device 100 disconnects the Bluetooth communication connection 1 from the electronic device 300, the electronic device 100 may send, to the electronic device 200, information about the event of disconnecting the Bluetooth communication connection 1, and the electronic device 200 may cancel display of the connected interface based on the information.

In some examples, after the call is transferred to the electronic device 100, the foregoing steps S825' and S826' may not be performed.

### Outgoing call scenario

The embodiment shown in FIG. 10 may be executed when the electronic device 100, the electronic device 200, and the electronic device 300 have all been successfully paired, the electronic device 100 establishes a Bluetooth communication connection to the electronic device 200, the electronic device 300 is in a case, and the electronic device 200 detects that a user triggers a dialing event.

**S1001:** The electronic device 200 detects that the user triggers the dialing event.

For example, a possible implementation in which the user triggers the dialing event on the electronic device 200 may be as follows.

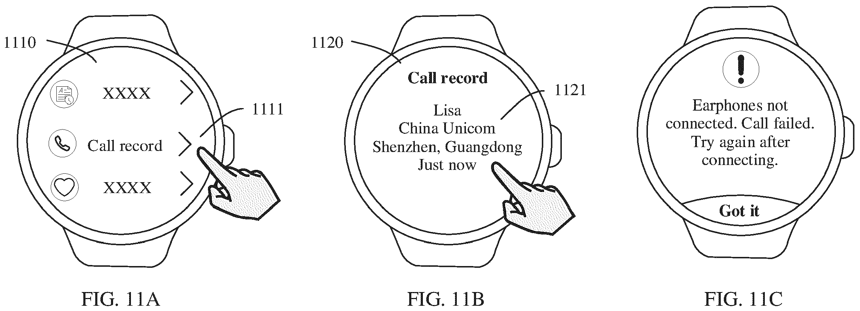

Refer to FIG. 11A. A user interface 1110 shown in FIG. 11A as an example may be a user interface corresponding to a function menu on the electronic device 200. The user interface may include one or more options (for example, an option 1111). The option 1111 may be used by the user to enter a call record interface to view a call record and dial a phone number in the call record. If the user wants to view the call record or dial the phone number in the call record, the electronic device 200 may detect an operation (for example, a tap operation) of the user on the option 1111 shown in FIG. 11A. In response to the operation, the electronic device 200 may display a user interface 1120 shown in FIG. 11B as an example. The user interface may be the call record interface, and the user interface may include one or more call records (for example, a call record 1121). It is assumed that the user wants to make a call to Lisa shown in the call record 1121, the electronic device 200 may detect that the user triggers the dialing event (for example, an operation of tapping the call record 1121), and generate information 1 about the dialing event.

Information recorded in each call record may include but is not limited to a phone number corresponding to the call record, a contact, and device information (for example, a MAC address) of an electronic device that generates the call record. For example, it is assumed that the call record 1121 is a call record generated when the user makes a call to a contact Lisa whose phone number is 186xxxx1105 by using the electronic device 100. In this case, a phone number corresponding to the call record 1121 is 186xxxx1105, the contact is Lisa, and device information of an electronic device that generates the call record 1121 is device information of the electronic device 100 (for example, a MAC address of the electronic device 100).

It should be noted that the one or more call records may be call records generated by an electronic device (for example, a mobile phone) that has established a wireless communication connection (for example, a Bluetooth communication connection) to the electronic device 200. In other words, when the electronic device (for example, the mobile phone) has an incoming call, the electronic device 200 may store a call record provided that the electronic device has notified the electronic device 200 of the incoming call. Subsequently, the electronic device 200 may support the user to trigger the dialing event by operating the call record.

In some examples, a call record list of the electronic device 200 may alternatively display only a call record generated by an electronic device (for example, a mobile phone) currently connected to the electronic device 200. In this way, after the user triggers the dialing event, a dialing failure that is subsequently caused because the electronic device 300 cannot successfully connect to the electronic device (for example, the mobile phone) can be avoided.

**S1002:** The electronic device 200 sends the information 1 about the dialing event to the electronic device 300.

The information 1 about the dialing event may include but is not limited to a dialed phone number (for example, the phone number corresponding to the call record 1121) and device information of a dialing device (for example, the device information of the electronic device that generates the call record 1121).

Before the foregoing step S1002 is performed, the electronic device 200 may trigger the electronic device 300 to switch from a sleep state to an awake state, so that the electronic device 300 can receive a message sent by the electronic device 200.

**S1003:** The electronic device 300 detects a removal event.

In some examples, if the electronic device 200 detects no removal event of the electronic device 300 after the electronic device 200 sends the information about the dialing event to the electronic device 300, the electronic device 300 is in a disconnected state (that is, a state in which the electronic device 300 does not establish a wireless communication connection to the electronic device 200). In this case, the electronic device 200 may display a user interface shown in FIG. 11C as an example. The user interface may include prompt information, to prompt the user that the electronic device 300 is in the disconnected state, the dialing fails, and the user may attempt to initiate dialing again after successfully connect to the electronic device 300.

After detecting the removal event of the electronic device 300, the electronic device 300 may trigger performing of subsequent steps S1004 and S 1005 and steps S 1006 and S 1007, to establish a Bluetooth communication connection to each of the electronic device 100 and the electronic device 200.

**S1004:** The electronic device 300 sends a Bluetooth reconnection broadcast message 1.

**S1005:** The electronic device 100 establishes a Bluetooth communication connection 1 to the electronic device 300.

**S1006:** The electronic device 300 sends a Bluetooth reconnection broadcast message 2.

**S1007:** The electronic device 200 establishes a Bluetooth communication connection 2 to the electronic device 300.

A specific performing process of steps S1004 and S 1005 and steps S1006 and S 1007 is similar to that of steps S806 and S807 and steps S809 and S810 in FIG. 8A. Details are not described herein again.

During actual application, after the electronic device 300 is removed from the case, the electronic device 300 usually reconnects to a device that has been paired with the electronic device 300 most recently. Therefore, after the electronic device 300 establishes the Bluetooth communication connection 1 to the electronic device 100, the electronic device 300 may compare the device information of the dialing device with the device information of the currently connected electronic device 100. If the device information of the dialing device is the same as the device information of the currently connected electronic device 100, it indicates that the dialing device is the currently connected electronic device 100, and subsequent steps may be performed. If the device information of the dialing device is different from the device information of the currently connected electronic device 100, it indicates that the dialing device is not the currently connected electronic device 100. In this case, the electronic device 300 needs to reconnect to the dialing device, and can continue to perform subsequent steps only after the reconnection succeeds. In some examples of this embodiment of this application, after the electronic device 300 is removed from the case, the electronic device 300 may alternatively not reconnect to a device that has been paired with the electronic device 300 most recently, but may reconnect to the dialing device based on the device information of the dialing device sent by the electronic device 200. After the reconnection succeeds, a subsequent step may be directly performed. In this way, the electronic device 300 does not need to determine whether a currently connected device is the dialing device.

**S1008:** The electronic device 300 detects an event that the user wears earphones.

The foregoing step S1008 may be used as a condition for triggering performing of the following step S 1009.

In some examples, the condition for triggering performing of the following step S 1009 may alternatively be that the electronic device 300 detects the event that the user wears the earphones (for example, earphone wearing event shown in FIG. 9B), and/or an event that the user presses a physical button (for example, a button that is on the electronic device 300 and that is used to make a call) or triggers a gesture operation (for example, double-tapping the electronic device 300).

**S1009:** The electronic device 300 sends information 2 about a dialing event to the electronic device 100 through the Bluetooth communication connection 1.

The information 2 about the dialing event may include but is not limited to a dialed phone number (for example, the phone number corresponding to the call record 1121).

In some examples, a condition for triggering performing of the foregoing step S1009 may alternatively be that the electronic device 300 successfully establishes the Bluetooth communication connection 1 to the electronic device 100. In this case, the foregoing step S1008 may not be performed.

**S1010:** The electronic device 100 performs a dialing operation based on the information 2 about the dialing event.

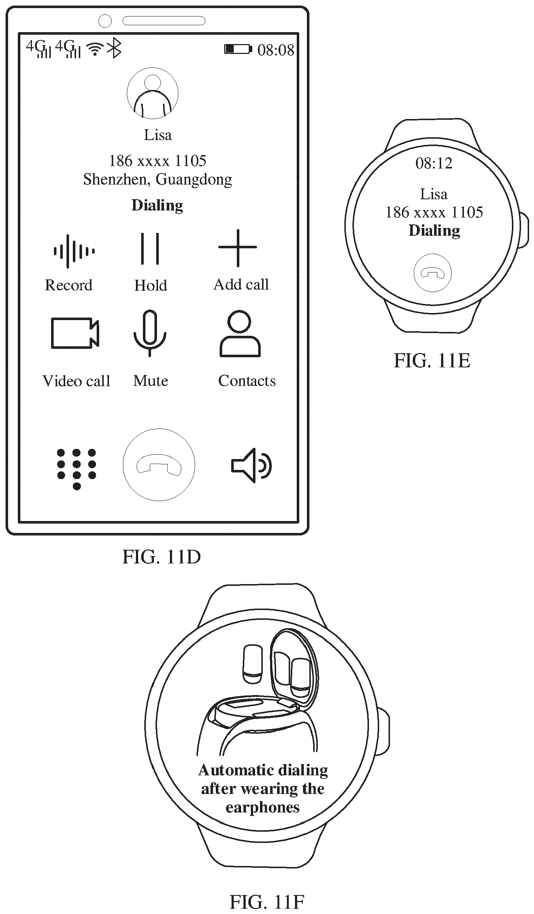

After the dialing operation is completed, the electronic device 100 may display a user interface shown in FIG. 11D as an example, and the electronic device 300 may alternatively display a user interface shown in FIG. 11E as an example, to prompt the user that the electronic device 100 has completed the dialing operation and is initiating a call.

In some examples, if the user does not wear the earphones, the electronic device 300 may send, to the electronic device 200 through the Bluetooth communication connection 2, a message indicating that the user does not wear the earphones. Further, the electronic device 200 may display, based on the message, a user interface shown in FIG. 11F as an example, to prompt the user to wear the earphones (for example, automatic dialing may be performed after the user wears the earphones). After the user wears the earphones and the electronic device 100 completes the dialing operation, the electronic device 200 may display the user interface shown in FIG. 11E as an example again. Optionally, the user interface shown in FIG. 11E as an example may also display the device information (for example, a device name of the dialing device) of the dialing device.

**S1011:** The electronic device 100 gets connected to a call.

**S1012:** The electronic device 100 sends a call connected message 1 to the electronic device 300 through the Bluetooth communication connection 1.

The call connected message 1 may include a signal of a call sound (namely, call audio) of the call.

**S1013:** The electronic device 300 sends a call connected message 2 to the electronic device 200 through the Bluetooth communication connection 2.

The call connected message 2 may include information indicating that the electronic device 100 gets connected to the call.

**S1014:** The electronic device 200 displays a connected interface based on the call connected message 2.

**S1015:** The electronic device 300 plays the call sound based on the call connected message 1.

In some examples, after the electronic device 100 gets connected to the call, the electronic device 100 may alternatively send the call connected message 2 to the electronic device 200, so that the electronic device 200 displays the connected interface (for example, a user interface 920 shown in FIG. 9C as an example) based on the message. In this case, the foregoing step S1013 may not be performed.

The foregoing steps are described by using an example in which the electronic device 300 is in the case. It is easy to understand that if the electronic device 300 is outside the case, and a Bluetooth communication connection is maintained between every two of the electronic device 100, the electronic device 200, and the electronic device 300, after the information 1 about the dialing event sent by the electronic device 200 is received, the foregoing steps S1004 to S 1007 do not need to be performed. The electronic device 300 only needs to determine whether the currently connected electronic device 100 is the dialing device. If the currently connected electronic device 100 is the dialing device, subsequent steps are triggered to be performed.

It is easy to understand that, in the foregoing outgoing call scenario, a call policy after earphone insertion (that is, "insertion and transfer" or "insertion and hang-up") is similar to that in the incoming call scenario in FIG. 8A and FIG. 8B. For a specific execution process, refer to FIG. 8A and FIG. 8B. Details are not described herein again.

In the embodiment shown in FIG. 3, a watch and earphones are paired with a same mobile phone, and a "connection manner 1" shown in FIG. 2G may be supported to be formed. To be specific, both the watch and the earphones are connected to the same mobile phone. A connection between the watch and the earphones and a connection between the earphones and the mobile phone may be established based on pairing information when the earphones are removed from a case.

In an embodiment of this application, the earphones may alternatively be separately paired with another mobile phone, and a connection manner between each of the watch and the earphones and the mobile phone may be changed from the "connection manner 1" shown in FIG. 2G to a "connection manner 2" shown in FIG. 2H. A process of separately pairing the earphones with the another mobile phone may be as follows.

First, the watch may receive an operation of a user, and the operation may be used to control the earphones to be paired.

Further, after the foregoing operation, the watch may receive a notification message sent by the earphones, to learn that the earphones are to be paired. The notification message may be transmitted by using a communication connection between the watch and the earphones. The communication connection may be a wireless communication connection (for example, a Bluetooth communication connection) established between the earphones and the watch, or may be an electrical connection formed by contact of communication electrodes.

Further, after the earphones are to be paired, the another mobile phone may discover the earphones to be paired by using a wireless communication technology like Bluetooth. After detecting an operation of connecting to the earphones by the user, the another mobile phone may pair with the earphones and establish a wireless communication connection (for example, a Bluetooth communication connection) to the earphones.

**The following describes a specific execution process of a communication method provided in an embodiment of this application in an incoming call scenario and an outgoing call scenario when a connection manner among an electronic device 100 (for example, a mobile phone A), an electronic device 200 (for example, a watch), an electronic device 300 (for example, earphones), and an electronic device 400 (for example, a mobile phone B) is a connection manner 2 shown in** **FIG. 2H****.**

The following embodiments are all executed when the electronic device 100 establishes a Bluetooth communication connection 1 to the electronic device 200, the electronic device 200 establishes a Bluetooth communication connection 2 to the electronic device 300, and the electronic device 300 establishes a Bluetooth communication connection 3 to the electronic device 400.

### Incoming call scenario 1 (the electronic device 400 has an incoming call)

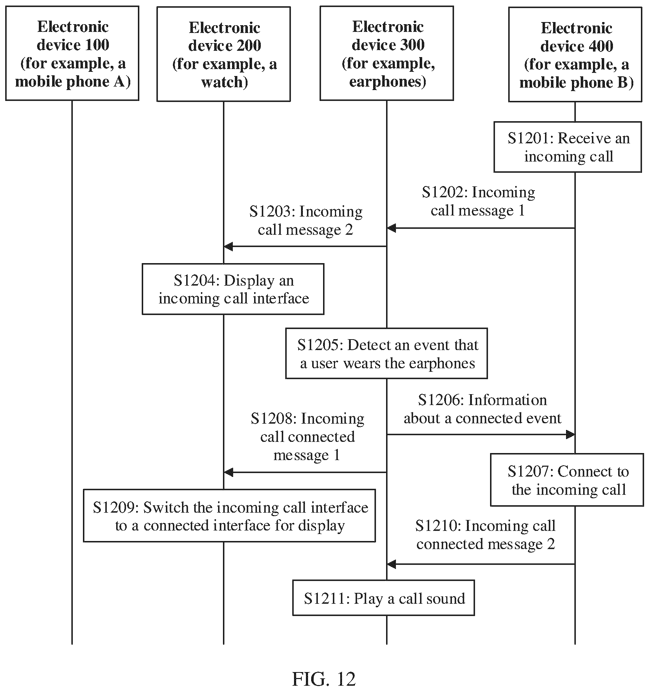

FIG. 12 shows an example of a specific procedure in a scenario in which the electronic device 400 has an incoming call. The following describes the detailed steps.

**S1201:** The electronic device 400 receives an incoming call.

**S1202:** The electronic device 400 sends an incoming call message 1 to the electronic device 300 through the Bluetooth communication connection 3.

The incoming call message 1 may include but is not limited to device information (for example, a MAC address) of the electronic device 400 and a phone number of the incoming call.

**S1203:** The electronic device 300 sends an incoming call message 2 to the electronic device 200 through the Bluetooth communication connection 2.

The incoming call message 2 may include but is not limited to device information (for example, a MAC address) of the electronic device 400 and a phone number of the incoming call.

**S1204:** The electronic device 200 displays an incoming call interface based on the incoming call message 2.

**S1205:** The electronic device 300 detects an event that a user wears the earphones.

The foregoing step S1205 may be used as a condition for triggering performing of the following step S1206.

In some examples, the condition for triggering performing of the following step S 1206 may alternatively be that the electronic device 300 detects the event that the user wears the earphones (for example, earphone wearing event shown in FIG. 9B), and/or an event that the user presses a physical button (for example, a button that is on the electronic device 300 and that is used to answer an incoming call) or triggers a gesture operation (for example, double-tapping the electronic device 300).

In some examples, the user may also trigger a connected event (for example, tap an answering option displayed in the incoming call interface) in the incoming call interface displayed by the electronic device 200. In this case, the electronic device 200 may send an indication message to the electronic device 300 through the Bluetooth communication connection 2, to indicate the electronic device 300 to perform the following step S 1206.

**S1206:** The electronic device 300 sends information about the connected event to the electronic device 400 through the Bluetooth communication connection 3.

The information about the connected event may include a call connection instruction, for example, an ATA (Attention Adapter) instruction.

**S1207:** The electronic device 400 gets connected to the incoming call based on the information about the connected event.

**S1208:** The electronic device 300 sends an incoming call connected message 1 to the electronic device 200 through the Bluetooth communication connection 2.

The incoming call connected message 1 may include information indicating that the electronic device 400 gets connected to the incoming call.

**S1209:** The electronic device 200 switches, based on the incoming call connected message 1, the incoming call interface to a connected interface for display.

**S1210:** The electronic device 400 sends an incoming call connected message 2 to the electronic device 300 through the Bluetooth communication connection 3.

The incoming call connected message 2 may include a signal of a call sound (namely, call audio) of the incoming call.

**S1211:** The electronic device 300 plays the call sound based on the incoming call connected message 2.

It is easy to understand that, in the foregoing incoming call scenario 1, a call policy after earphone insertion (that is, "insertion and transfer" or "insertion and hang-up") is similar to that in the incoming call scenario in FIG. 8A and FIG. 8B. For a specific execution process, refer to FIG. 8A and FIG. 8B. Details are not described herein again.

### Incoming call scenario 2 (both the electronic device 100 and the electronic device 400 have incoming calls)

FIG. 13A to FIG. 13C show an example of a specific procedure in a scenario in which both the electronic device 100 and the electronic device 400 have incoming calls. The following describes the detailed steps.

**S1301:** The electronic device 100 receives an incoming call 1.

**S1302:** The electronic device 100 sends an incoming call message 1 to the electronic device 200 through the Bluetooth communication connection 1.

The incoming call message 1 may include but is not limited to device information (for example, a MAC address) of the electronic device 100 and a phone number of the incoming call 1.

**S1303:** The electronic device 400 receives an incoming call 1'.

**S1304:** The electronic device 400 sends an incoming call message 1' to the electronic device 300 through the Bluetooth communication connection 3.

The incoming call message 1' may include but is not limited to device information (for example, a MAC address) of the electronic device 400 and a phone number of the incoming call 1'.

**S1305:** The electronic device 300 sends an incoming call message 1" to the electronic device 200 through the Bluetooth communication connection 2.

The incoming call message 1" may include but is not limited to device information (for example, a MAC address) of the electronic device 400 and a phone number of the incoming call 1'.

**S1306:** The electronic device 200 displays, based on the incoming call message 1, an incoming call interface corresponding to the incoming call 1.

In this embodiment of this application, both the electronic device 100 and the electronic device 300 may send an incoming call message to the electronic device 200, and the electronic device 200 can display an interface of only one call. Therefore, when both the electronic device 100 and the electronic device 400 have the incoming calls, the electronic device 200 may display an incoming call interface corresponding to an electronic device from which the electronic device 200 first receives the incoming call message.

In the embodiment shown in FIG. 13A to FIG. 13C, an example in which the electronic device 200 first receives the incoming call message 1 is used.

It is easy to understand that if the electronic device 200 first receives the incoming call message 1", the electronic device 200 may display, based on the incoming call message 1", an incoming call interface corresponding to the incoming call 1'.

In some examples, the foregoing steps S1303 to S 1305 may alternatively be performed after the foregoing step S1306. To be specific, when the electronic device 200 is displaying the incoming call interface corresponding to the incoming call 1, the electronic device 400 has the incoming call.

After the electronic device 200 displays the incoming call interface corresponding to the incoming call 1, there may be two cases of answering the incoming call. In one case, the incoming call 1 is answered. In the other case, the incoming call 1 times out and is not answered (that is, the incoming call of the electronic device 100 is not answered when the electronic device 100 stops ringing), the incoming call 1' does not time out (that is, the electronic device 400 is still ringing), and the incoming call 1' is answered. The following describes the foregoing two cases in detail.

It should be noted that, when the incoming call 1 of the electronic device 100 times out, the electronic device 100 may send a timeout notification message of the incoming call 1 to the electronic device 200 by using the Bluetooth communication connection 1, and the electronic device 200 may cancel, based on the timeout notification message of the incoming call 1, display of the incoming call interface corresponding to the incoming call 1. Similarly, when the incoming call 1' of the electronic device 400 times out, the electronic device 400 may send a timeout notification message of the incoming call 1' to the electronic device 200 by using the electronic device 300. If the electronic device 200 is displaying the incoming call interface corresponding to the incoming call 1', the electronic device 200 may also cancel, based on the timeout notification message of the incoming call 1', display of the incoming call interface corresponding to the incoming call 1'.

### Case 1: The incoming call 1 is answered

**S1307:** The electronic device 200 detects an operation of answering the incoming call 1 by a user.

The operation of answering the incoming call 1 by the user may be an operation (for example, a tap operation) of the user on an answering option in the incoming call interface corresponding to the incoming call 1.

**S1308:** The electronic device 200 sends an answering message 1 to the electronic device 300 through the Bluetooth communication connection 2, where the message includes a message of answering the incoming call 1 by the user and the device information of the electronic device 100.

The device information of the electronic device 100 in the answering message 1 may include a MAC address of the electronic device 100.

**S1309:** The electronic device 300 disconnects the Bluetooth communication connection 3.

The electronic device 300 may determine, based on the device information of the electronic device 100 in the answering message 1, that the electronic device 100 needs to be reconnected. Before reconnecting to the electronic device 100, the electronic device 300 disconnects a Bluetooth communication connection (that is, the Bluetooth communication connection 3) from the electronic device 400.

**S1310:** The electronic device 300 sends a Bluetooth reconnection broadcast message 1.

**S1311:** The electronic device 300 establishes a Bluetooth communication connection 4 to the electronic device 100.

During actual application, when the electronic device 300 reconnects to the electronic device 100, a reconnection failure may occur. In this case, the electronic device 300 may send a reconnection failure message to the electronic device 200 through the Bluetooth communication connection 2. The electronic device 200 may display prompt information (for example, "The earphones fail to be connected. Answer the call on your mobile phone") based on the message, to prompt the user to answer the incoming call 1 on the electronic device 100.

**S1312:** The electronic device 300 sends, to the electronic device 100 through the Bluetooth communication connection 4, information about an event of getting connected to the incoming call 1.

The information about the event of getting connected to the incoming call 1 may include a call connection instruction, for example, an ATA (Attention Adapter) instruction.

**S1313:** The electronic device 100 gets connected to the incoming call 1 based on the information about the event of getting connected to the incoming call 1.

**S1314:** The electronic device 300 sends an incoming call 1 connected message 1 to the electronic device 200 through the Bluetooth communication connection 2.

The incoming call 1 connected message 1 may include information indicating that the electronic device 100 gets connected to the incoming call 1.

**S1315:** The electronic device 200 displays, based on the incoming call 1 connected message 1, a connected interface corresponding to the incoming call 1.

**S1316:** The electronic device 100 sends an incoming call 1 connected message 2 to the electronic device 300 through the Bluetooth communication connection 4.

The incoming call 1 connected message 2 may include a signal of a call sound (namely, call audio) of the incoming call 1.

**S1317:** The electronic device 300 plays the call sound of the incoming call 1 based on the incoming call 1 connected message 2.

In some examples, after the electronic device 100 gets connected to the incoming call 1, the electronic device 100 may send the incoming call 1 connected message 1 to the electronic device 200 through the Bluetooth communication connection 1, so that the electronic device 200 displays the connected interface based on the message. In this case, the electronic device 300 does not need to perform the foregoing step S1314.

It is easy to understand that when the electronic device 300 is answering the incoming call of the electronic device 100, if the electronic device 400 has an incoming call, because the electronic device 300 has disconnected the Bluetooth communication connection from the electronic device 400, in this case, the electronic device 300 does not receive an incoming call message from the electronic device 400.

### Case 2: The incoming call 1 times out and is not answered, while the incoming call 1' does not time out, and is answered

**S1307':** The electronic device 200 cancels display of the incoming call interface corresponding to the incoming call 1, and displays, based on the incoming call message 1", the incoming call interface corresponding to the incoming call 1'.

In some examples, a trigger condition of "the electronic device 200 cancels display of the incoming call interface corresponding to the incoming call 1, and displays the incoming call interface corresponding to the incoming call 1‴ may alternatively be that the user hangs up the incoming call 1, and the incoming call 1' does not time out.

**S1308':** The electronic device 200 detects an operation of answering the incoming call 1' by a user.

The operation of answering the incoming call 1' by the user may be an operation (for example, a tap operation) of the user on an answering option in the incoming call interface corresponding to the incoming call 1'.

**S1309':** The electronic device 200 sends an answering message 1' to the electronic device 300 through the Bluetooth communication connection 2, where the message includes a message of answering the incoming call 1' by the user.

**S1310':** The electronic device 300 sends, to the electronic device 400 through the Bluetooth communication connection 3, information about an event of getting connected to the incoming call 1'.

The information about the event of getting connected to the incoming call 1' may include a call connection instruction, for example, an ATA (Attention Adapter) instruction.

**S1311':** The electronic device 400 gets connected to the incoming call 1' based on the information about the event of getting connected to the incoming call 1'.

**S1312':** The electronic device 300 sends an incoming call 1' connected message 1 to the electronic device 200 through the Bluetooth communication connection 2.

The incoming call 1' connected message 1 may include information indicating that the electronic device 400 gets connected to the incoming call 1'.

**S1313':** The electronic device 200 displays, based on the incoming call 1' connected message 1, a connected interface corresponding to the incoming call 1'.

**S1314':** The electronic device 400 sends an incoming call 1' connected message 2 to the electronic device 300 through the Bluetooth communication connection 3.

The incoming call 1' connected message 2 may include a signal of a call sound (namely, call audio) of the incoming call 1'.

**S1315':** The electronic device 300 plays the call sound of the incoming call 1' based on the incoming call 1' connected message 2.

It is easy to understand that, in the foregoing incoming call scenario 2, a call policy after earphone insertion (that is, "insertion and transfer" or "insertion and hang-up") is similar to that in the incoming call scenario in FIG. 8A and FIG. 8B. For a specific execution process, refer to FIG. 8A and FIG. 8B. Details are not described herein again.

In some examples, when the electronic device 300 is answering the incoming call of the electronic device 400, and the electronic device 200 is displaying a connected interface corresponding to the incoming call of the electronic device 400, if the electronic device 100 has an incoming call, the electronic device 100 may send an incoming call message to the electronic device 200 through the Bluetooth communication connection 1. The electronic device 200 may display a corresponding incoming call interface based on the incoming call message. A subsequent process of answering the incoming call is similar to that is in the steps in Case 1 in FIG. 13A to FIG. 13C. Details are not described herein again. It is easy to understand that, in the foregoing case, after the electronic device 300 starts to answer the incoming call of the electronic device 100, the call sound of the incoming call of the electronic device 400 may be automatically transferred to the electronic device 400.

### Outgoing call scenario

In this embodiment of this application, the electronic device 200 may store and display a plurality of call records. The plurality of call records may be call records generated by different electronic devices (for example, the electronic device 100 and the electronic device 400). A user may perform an operation on (for example, tapping) one of the call records to trigger a dialing event, so that a dialing device performs a dialing operation. The dialing device is an electronic device that generates the call record. For related descriptions of the electronic device 200 storing and displaying the call record, refer to the foregoing related text descriptions. Details are not described herein again.

FIG. 14A and FIG. 14B show an example of a specific procedure in the outgoing call scenario. The following describes the detailed steps.

The following provides descriptions by using an example in which the dialing devices are separately the electronic device 400 and the electronic device 100.

### Case 1: The dialing device is the electronic device 400

**S1401:** The electronic device 200 detects that the user triggers a dialing event 1.

**S1402:** The electronic device 200 sends information 1 about the dialing event 1 to the electronic device 300 through the Bluetooth communication connection 2.

The information 1 about the dialing event 1 may include but is not limited to a dialed phone number and device information of the dialing device.

**S1403:** The electronic device 300 sends information 2 about the dialing event 1 to the electronic device 400 through the Bluetooth communication connection 3.

The information 2 about the dialing event 1 may include but is not limited to the dialed phone number.

**S1404:** The electronic device 400 performs a dialing operation based on the information 2 about the dialing event 1.

**S1405:** The electronic device 400 gets connected to a call 1.

**S1406:** The electronic device 400 sends a call 1 connected message 1 to the electronic device 300 through the Bluetooth communication connection 3.

The call 1 connected message 1 may include a signal of a call sound (namely, call audio) of the call 1.

**S1407:** The electronic device 300 sends a call 1 connected message 2 to the electronic device 200 through the Bluetooth communication connection 2.

The call 1 connected message 2 may include information indicating that the electronic device 400 gets connected to the call 1.

**S1408:** The electronic device 200 displays, based on the call 1 connected message 2, a connected interface corresponding to the call 1.

**S1409:** The electronic device 300 plays the call sound of the call 1 based on the call 1 connected message 1.

### Case 2: The dialing device is the electronic device 100

**S1401':** The electronic device 200 detects that the user triggers a dialing event 1'.

**S1402':** The electronic device 200 sends information 1 about the dialing event 1' to the electronic device 300 through the Bluetooth communication connection 2.

The information 1 about the dialing event 1' may include but is not limited to a dialed phone number and device information of the dialing device.

**S1403':** The electronic device 300 disconnects the Bluetooth communication connection 3.

The electronic device 300 may determine, based on the device information of the dialing device in the information 1 about the dialing event 1', that the electronic device 100 needs to be reconnected. Before reconnecting to the electronic device 100, the electronic device 300 disconnects a Bluetooth communication connection (that is, the Bluetooth communication connection 3) from the electronic device 400.

**S1404':** The electronic device 300 sends a Bluetooth reconnection broadcast message 1.

**S1405':** The electronic device 300 establishes a Bluetooth communication connection 4 to the electronic device 100.

During actual application, when the electronic device 300 reconnects to the electronic device 100, a reconnection failure may occur. In this case, the electronic device 300 may send a reconnection failure message to the electronic device 200 through the Bluetooth communication connection 2. The electronic device 200 may display related prompt information (for example, "The earphones fail to be connected to the electronic device 100. Do you want to continue to make a call with the electronic device 400?") based on the message, to prompt the user to perform a dialing operation on the electronic device 400. When detecting that the user agrees to continue to make a call with the electronic device 400, the electronic device 200 may send, to the electronic device 300 through the Bluetooth communication connection 2, a message indicating that the user agrees to continue to make the call with the electronic device 400. After receiving the message, the electronic device 300 may re-establish a Bluetooth communication connection to the electronic device 400, and send the information 2 about the dialing event 1' to the electronic device 400 through the Bluetooth communication connection. The information may include the dialed phone number, to trigger the electronic device 400 to perform a dialing operation based on the information.

**S1406':** The electronic device 300 sends the information 2 about the dialing event 1' to the electronic device 100 through the Bluetooth communication connection 4.

The information 2 about the dialing event 1' may include but is not limited to the dialed phone number.

**S1407':** The electronic device 100 performs a dialing operation based on the information 2 about the dialing event 1'.

**S1408':** The electronic device 100 gets connected to a call 1'.

**S1409':** The electronic device 100 sends a call 1' connected message 1 to the electronic device 300 through the Bluetooth communication connection 4.

The call 1' connected message 1 may include a signal of a call sound (namely, call audio) of the call 1'.

**S1410':** The electronic device 300 sends a call 1' connected message 2 to the electronic device 200 through the Bluetooth communication connection 2.

The call 1' connected message 2 may include information indicating that the electronic device 100 gets connected to the call 1'.

**S1411':** The electronic device 200 displays, based on the call 1' connected message 2, a connected interface corresponding to the call 1'.

**S1412':** The electronic device 300 plays the call sound of the call 1' based on the call 1' connected message 1.

In some examples, after the electronic device 100 gets connected to the call 1', the electronic device 100 may alternatively send the call 1' connected message 2 to the electronic device 200 through the Bluetooth communication connection 1, so that the electronic device 200 displays the connected interface based on the message. In this case, the foregoing step S1410' may not be performed.

In some examples, a call record list of the electronic device 200 may alternatively display only a call record generated by an electronic device (for example, a mobile phone) currently connected to the electronic device 200. In this way, after the user triggers the dialing event, a dialing failure can be avoided.

It is easy to understand that, in the foregoing outgoing call scenario, a call policy after earphone insertion (that is, "insertion and transfer" or "insertion and hang-up") is similar to that in the incoming call scenario in FIG. 8A and FIG. 8B. For a specific execution process, refer to FIG. 8A and FIG. 8B. Details are not described herein again.

### Music playback scenario

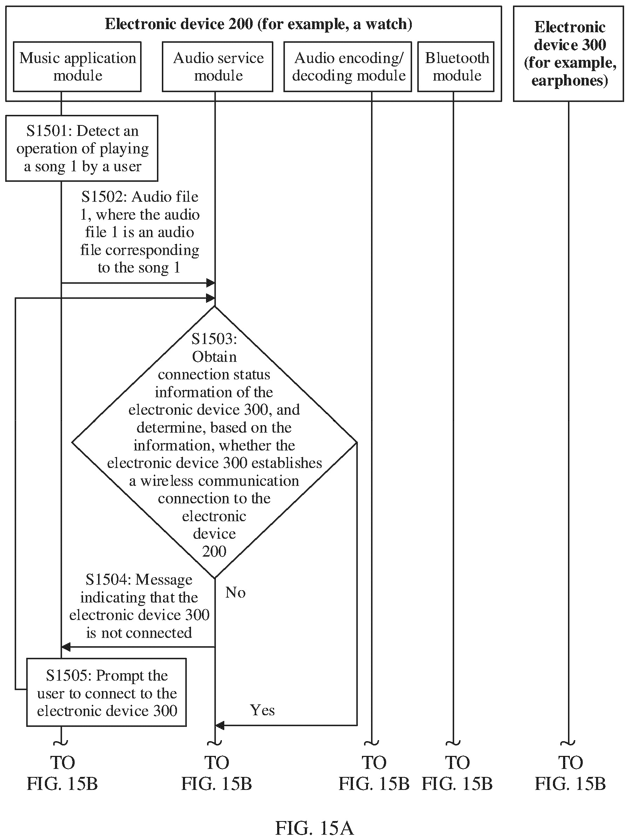

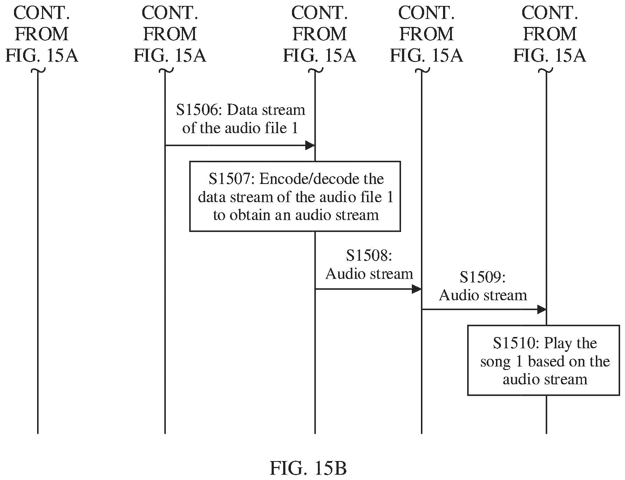

FIG. 15A and FIG. 15B show an example of a specific procedure of a communication method in the music playback scenario according to an embodiment of this application.

As shown in FIG. 15A and FIG. 15B, the method may be applied to a communication system including an electronic device 200 (for example, a watch) and an electronic device 300 (for example, earphones). An electronic device is formed after form integrated is performed on the electronic device 200 and the electronic device 300. The electronic device 200 may include a music application module, an audio service module, an audio encoding/decoding module, and a Bluetooth module. The following describes in detail specific steps of the method.

**S1501:** The music application module of the electronic device 200 detects an operation of playing a song 1 by a user.

**S1502:** In response to the operation of playing the song 1 by the user, the music application module of the electronic device 200 sends an audio file 1 to the audio service module of the electronic device 200, where the audio file 1 is an audio file corresponding to the song 1.

**S1503:** The audio service module of the electronic device 200 obtains connection status information of the electronic device 300, and determines, based on the information, whether the electronic device 300 establishes a wireless communication connection to the electronic device 200. If the electronic device 300 does not establish the wireless communication connection to the electronic device 200, the following step S1504 is performed. If the electronic device 300 establishes the wireless communication connection to the electronic device 200, the following step S1506 is performed.

The audio service module of the electronic device 200 may obtain the connection status information of the electronic device 300 from the Bluetooth module of the electronic device 200. The connection status information of the electronic device 300 may include an indication message indicating whether the electronic device 200 establishes the wireless communication connection (for example, a Bluetooth communication connection) to the electronic device 300.

**S1504:** The audio service module of the electronic device 200 sends, to the music application module of the electronic device 200, a message indicating that the electronic device 300 is not connected.

That "the electronic device 300 is not connected" may mean that the electronic device 300 does not establish the wireless communication connection to the electronic device 200. For example, the electronic device 300 is in a case, or the electronic device 300 and the electronic device 200 are not in a communication distance range in which the wireless communication connection can be established.

**S1505:** The music application module of the electronic device 200 prompts, based on the message indicating that the electronic device 300 is not connected, the user to connect to the electronic device 300.

After determining that the electronic device 300 establishes the wireless communication connection to the electronic device 200, the electronic device 200 may send audio data of the song 1 to the electronic device 300, so that the electronic device 300 plays the song 1. A possible implementation may be the following steps S1506 to S1510.

**S1506:** The audio service module of the electronic device 200 sends a data stream of the audio file 1 to the audio encoding/decoding module of the electronic device 200.

**S1507:** The audio encoding/decoding module of the electronic device 200 encodes/decodes the data stream of the audio file 1 to obtain an audio stream.

The audio encoding/decoding module of the electronic device 200 may first decode the data stream of the audio file 1 to obtain an audio stream in a pulse code modulation (Pulse Code Modulation, PCM) format, and further encode the audio stream in the PCM format to obtain an audio stream in an audio coding format supported by Bluetooth, for example, an audio stream in a sub-band coding (Sub-band Coding, SBC) format, or an audio stream in an advanced audio coding (Advanced Audio Coding, AAC) format. This is not limited in embodiments of this application.

**S1508:** The audio decoding module of the electronic device 200 sends the audio stream to the Bluetooth module of the electronic device 200.

**S1509:** The Bluetooth module of the electronic device 200 sends the audio stream to the electronic device 300.

The Bluetooth module of the electronic device 200 may send the audio stream to the electronic device 300 according to a Bluetooth advanced audio distribution profile (Advanced Audio Distribution Profile, A2DP).

**S1510:** The electronic device 300 plays the song 1 based on the audio stream.

### Upgrade scenario

FIG. 16 shows an example of a specific procedure of a communication method in the upgrade scenario according to an embodiment of this application.

As shown in FIG. 16, the method may be applied to a communication system including an electronic device 200 (for example, a watch), an electronic device 300 (for example, earphones), an electronic device 100 (for example, a mobile phone), and an upgrade server. An electronic device is formed after form integrated is performed on the electronic device 200 and the electronic device 300. The following describes in detail specific steps of the method.

Generally, to make up for some vulnerabilities, incompatibility, and other problems existing in firmware of a current version of the earphones/watch, development staff develops firmware of a new version, so that the firmware of the new version can be used to upgrade firmware of an old version in the earphones/watch. In this embodiment of this application, the earphones/watch uses an over-the-air (Over The Air, OTA) upgrade technology to upgrade a fixed part. A data packet used for upgrading the fixed part may be referred to as an upgrade packet, and the upgrade packet may be one or more.

**S1601:** The electronic device 200 reads latest version number information on the electronic device 100.

The electronic device 100 may read the latest version number information from the upgrade server. Then, the electronic device 200 may periodically read version number information on the electronic device 100 (for example, on a sports and health application installed on the electronic device 100). Alternatively, the electronic device 200 may read version number information on the electronic device 100 when triggered by a user. Alternatively, the electronic device 100 may actively send the latest version number information to the electronic device 200 when firmware is updated, to prompt the user to trigger an upgrade operation in a timely manner when the firmware is updated.

**S1602:** The upgrade server sends the upgrade package to the electronic device 200 by using the electronic device 100.

The electronic device 100 may periodically detect whether the upgrade server updates firmware of the electronic device 200/the electronic device 300. If the upgrade server updates the firmware of the electronic device 200/the electronic device 300, the electronic device 100 may download the upgrade package from the upgrade server in advance and send the upgrade package to the electronic device 200 based on a wireless communication connection (for example, a Bluetooth communication connection). Alternatively, the electronic device 100 may download the upgrade package from the upgrade server in advance, and send the upgrade package to the electronic device 200 based on a wireless communication connection (for example, a Bluetooth communication connection) after detecting an operation of triggering an upgrade by the user. Alternatively, the electronic device 100 may download only the latest version number information first, download the upgrade package after detecting an operation of triggering an upgrade by the user, and sent the upgrade package to the electronic device 200 based on a wireless communication connection (for example, a Bluetooth communication connection).

**S1603:** The electronic device 200 detects the operation of triggering the upgrade by the user.

After detecting the operation of triggering the upgrade by the user, the electronic device 200 may perform the following step S 1604.

In some examples, the operation of triggering the upgrade by the user may alternatively be performed on the electronic device 100. In this case, the electronic device 100 may notify, based on the wireless communication connection (for example, the Bluetooth communication connection), the electronic device 200 to perform the following step S1604.

**S1604:** The electronic device 200 determines whether the earphones allow an upgrade, and if the earphones allow the upgrade, the following step S 1605 is performed; or if the earphones do not allow the upgrade, prompt information is displayed.

The electronic device 200 may determine whether the electronic device 300 allows an upgrade (for example, whether the electronic device 300 is in a case, whether a battery level of the electronic device 300 exceeds a preset threshold, or the like). If the electronic device 300 allows the upgrade (for example, a condition that the electronic device 300 is in the case and the battery level of the electronic device 300 exceeds the preset threshold is met), the electronic device 200 may perform the following step S1605. If the electronic device 300 does not allow the upgrade, the electronic device 200 may display prompt information indicating that the electronic device 300 currently does not allow the upgrade, so that the electronic device 300 allows an update by performing a user operation (for example, placing the electronic device 300 in the case, or charging the electronic device 300 until the battery level of the electronic device 300 exceeds the preset threshold).

In some examples, an upgrade can be performed only when both two earphones of the electronic device 300 are allowed to be upgraded, and a single earphone cannot be independently upgraded. In some other examples, when a single earphone is allowed to be upgraded, an upgrade may be performed separately, and the other earphone is subsequently separately upgraded when an upgrade is allowed.

**S1605:** The electronic device 200 sends the upgrade package to the electronic device 300.

**S1606:** The electronic device 300 starts an upgrade based on the upgrade package.

The electronic device 200 may obtain upgrade progress information of the electronic device 300, and display an upgrade progress interface based on the upgrade progress information.

After the electronic device 300 is successfully upgraded, the following step S1607 may be performed. After the electronic device 300 fails to be upgraded, the electronic device 300 may send an upgrade failure notification message to the electronic device 200. The electronic device 200 may display prompt information based on the message, to prompt the user that the electronic device 300 fails to be upgraded.

After the electronic device 300 fails to be upgraded, the user may re-trigger the upgrade.

**S1607:** The electronic device 300 sends an upgrade complete notification message to the electronic device 200.

**S1608:** The electronic device 200 starts an upgrade.

In an upgrade process, the electronic device 200 may display an upgrade progress interface based on upgrade progress information of the electronic device 200.

When the electronic device 200 fails to be upgraded, the electronic device 200 may display prompt information, to prompt the user that the electronic device 300 fails to be upgraded.

After the electronic device 200 fails to be upgraded, the user may re-trigger the upgrade.

In some examples, after both the electronic device 200 and the electronic device 300 are successfully upgraded, the electronic device 200 may display prompt information, to prompt the user that both the electronic device 200 and the electronic device 300 are successfully upgraded, and an entire upgrade process ends.

In some examples, alternatively, an upgrade of the electronic device 200 may be first started, and then an upgrade of the electronic device 300 is started after the electronic device 200 is upgraded. In some other examples, the upgrade of the electronic device 200 and the upgrade of the electronic device 300 may alternatively be simultaneously started.

In the foregoing upgrade process, the electronic device 300 is in the case. Therefore, the electronic device 200 and the electronic device 300 may communicate (for example, transmit an upgrade package) by using an electrical connection formed by contact of electrodes. In some examples, the electronic device 300 may not be in the case when being upgraded. In this case, the electronic device 200 and the electronic device 300 may communicate (for example, transmit an upgrade package) by using a wireless communication connection (for example, a Bluetooth communication connection).

In this way, the electronic device 200 and the electronic device 300 complete a one-stop upgrade process. The user can complete an entire upgrade process of the electronic device 200 and the electronic device 300 by performing one upgrade operation. This is simple and convenient, and improves user experience.

All or some of the foregoing embodiments may be implemented through software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions in this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Persons of ordinary skill in the art may understand that all or some of the procedures of the methods in embodiments may be implemented by a computer program instructing related hardware. The program may be stored in the computer-readable storage medium. The foregoing storage medium includes any medium that can store program code, like a ROM, a random access memory RAM, a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A pairing and connection method, applied to a first device, wherein the first device comprises a first subdevice and earphones, earphone slots accommodating the earphones are disposed in the first subdevice, and the method comprises:
pairing, by the first subdevice, with a second device and establishing a communication connection to the second device; and
sending, by the first subdevice, device information of the earphones to the second device based on the communication connection, wherein the device information of the earphones is used for pairing the second device with the earphones.

2. The method according to claim 1, wherein the device information of the earphones is obtained from the earphones by the first subdevice by using an electrical connection formed by contact of a communication electrode of each of the earphones with a communication electrode in each of the earphone slots.

3. The method according to claim 2, wherein the method further comprises pairing, by the first subdevice, with the earphones based on the device information of the earphones.

4. The method according to claim 3, wherein the first subdevice pairs with the earphones when the earphones are located in the earphone slots.

5. The method according to claim 3 or 4, wherein the pairing, by the first subdevice, with the earphones based on the device information of the earphones specifically comprises:
if just a single earphone is located in one of the earphone slots, pairing, by the first subdevice based on the device information of the earphones, with the single earphone located in the earphone slot; or
if two earphones are located in the earphone slots, pairing, by the first subdevice based on the device information of the earphones, with the two earphones located in the earphone slots.

6. The method according to any one of claims 1 to 5, wherein when the earphones successfully pair with the second device, the method further comprises:
detecting, by the first subdevice, a first operation of a user;
in response to the first operation, controlling, by the first subdevice, the earphones to be paired; and
pairing, by the earphones, with a third device.

7. A call control method, applied to a first device, wherein the first device comprises a first subdevice and earphones, the first subdevice establishes a first communication connection to a second device, the first subdevice establishes a second communication connection to the earphones, the earphones establish a third communication connection to a third device, and the method comprises:
receiving, by the first subdevice based on the first communication connection, a first message sent by the second device, wherein the first message indicates that the second device receives a first incoming call;
receiving, by the first subdevice based on the second communication connection, a second message sent by the earphones, wherein the second message indicates that the third device receives a second incoming call, and the second message is sent by the third device to the earphones based on the third communication connection; and
displaying, by the first subdevice, a first incoming call interface based on the first message, or displaying a second incoming call interface based on the second message.

8. The method according to claim 7, wherein the first incoming call interface is an incoming call interface corresponding to the first incoming call, and after the displaying, by the first subdevice, a first incoming call interface based on the first message, the method further comprises:
detecting, by the first subdevice, a first operation of a user, wherein the first operation is used to answer the first incoming call;
in response to the first operation, sending, by the first subdevice, a third message to the earphones based on the second communication connection, wherein the third message comprises device information of the second device;
disconnecting, by the earphones, the third communication connection based on the device information of the second device, and establishing a fourth communication connection to the second device;
sending, by the first subdevice, a fourth message to the second device based on the first communication connection; or sending, by the earphones, a fourth message to the second device based on the fourth communication connection, wherein the fourth message indicates the second device to get connected to the first incoming call; and
receiving and playing, by the earphones based on the fourth communication connection, call audio of the first incoming call from the second device.

9. The method according to claim 7, wherein the second incoming call interface is an incoming call interface corresponding to the second incoming call, and after the displaying, by the first subdevice, a second incoming call interface based on the second message, the method further comprises:
detecting, by the first subdevice, a second operation of a user, wherein the second operation is used to answer the second incoming call;
in response to the second operation, sending, by the first subdevice, a fifth message to the earphones based on the second communication connection;
sending, by the earphones, a sixth message to the third device based on the fifth message, wherein the sixth message indicates the third device to get connected to the second incoming call; and
receiving and playing, by the earphones based on the third communication connection, call audio of the second incoming call from the third device.

10. A call control method, applied to a first device, wherein the first device comprises a first subdevice and earphones, the first subdevice establishes a first communication connection to a second device, the first subdevice establishes a second communication connection to the earphones, the earphones establish a third communication connection to a third device, and the method comprises:
receiving and playing, by the earphones based on the third communication connection, call audio of a first incoming call from the third device;
sending, by the earphones, a first message to the first subdevice based on the second communication connection, wherein the first message indicates that the third device gets connected to the first incoming call;
displaying, by the first subdevice, a first connected interface based on the first message;
receiving, by the first subdevice based on the first communication connection, a second message sent by the second device, wherein the second message indicates that the second device receives a second incoming call;
switching, by the first subdevice based on the second message, the first connected interface to a first incoming call interface for display, and detecting a first operation of a user, wherein the first operation is used to answer the second incoming call;
in response to the first operation, sending, by the first subdevice, a third message to the earphones based on the second communication connection, wherein the third message comprises device information of the second device;
disconnecting, by the earphones, the third communication connection from the second device based on the device information of the second device, and establishing a fourth communication connection;
sending, by the first subdevice, a fourth message to the second device based on the first communication connection; or sending, by the earphones, a fourth message to the second device based on the fourth communication connection, wherein the fourth message indicates the second device to get connected to the second incoming call; and
receiving and playing, by the earphones based on the fourth communication connection, call audio of the second incoming call from the second device.

11. The method according to claim 10, wherein before the receiving and playing, by the earphones based on the third communication connection, call audio of a first incoming call from the third device, the method further comprises:
sending, by the earphones, the fifth message to the first subdevice based on the second communication connection, wherein the fifth message indicates that the third device receives the first incoming call;
displaying, by the first subdevice, a second incoming call interface based on the fifth message, and detecting a second operation of the user, wherein the second operation is used to answer the first incoming call;
in response to the second operation, sending, by the first subdevice, a sixth message to the earphones based on the second communication connection; and
sending, by the earphones, a seventh message to the third device based on the sixth message, wherein the seventh message indicates the third device to get connected to the first incoming call.

12. A call control method, applied to a first device, wherein the first device comprises a first subdevice and earphones, earphone slots accommodating the earphones are disposed in the first subdevice, the earphones are located in the earphone slots, the first subdevice establishes a first communication connection to a second device, the first subdevice establishes a second communication connection to the earphones, and the method comprises:
receiving, by the first subdevice based on the first communication connection, a first message sent by the second device, wherein the first message indicates that the second device receives an incoming call;
displaying, by the first subdevice, an incoming call interface based on the first message, and sending a second message to the earphones based on the second communication connection, wherein the second message comprises device information of the second device;
detecting, by the earphones, that the earphones are taken out of the earphone slots, and establishing, by the earphones, a third communication connection to the second device based on the device information of the second device;
detecting, by the earphones, a first operation of a user;
in response to the first operation, sending, by the earphones, a third message to the second device based on the third communication connection, wherein the third message indicates the second device to get connected to the incoming call; and
receiving and playing, by the earphones based on the third communication connection, call audio of the incoming call from the second device.

13. The method according to claim 12, wherein after the detecting, by the earphones, that the earphones are taken out of the earphone slots, the method further comprises:
establishing, by the earphones, a fourth communication connection to the first subdevice;
sending, by the earphones, a fourth message to the first subdevice based on the fourth communication connection, wherein the fourth message indicates that the second device gets connected to the incoming call; and
displaying, by the first subdevice, a connected interface based on the fourth message.

14. The method according to claim 13, wherein after the displaying, by the first device, a connected interface based on the fourth message, the method further comprises:
detecting, by the first subdevice, that the earphones are placed in the earphone slots; and
sending, by the first subdevice, a fifth message to the earphones, and sending, by the earphones, a sixth message to the second device based on the fifth message, wherein the sixth message indicates the second device to hang up the incoming call; or sending, by the first subdevice, a seventh message to the earphones, disconnecting, by the earphones, the second communication connection from the second device based on the seventh message, and playing, by the second device, the call audio of the incoming call.

15. The method according to claim 13 or 14, wherein after the displaying, by the first device, a connected interface based on the fourth message, the method further comprises:
detecting, by the first subdevice, a second operation of the user;
in response to the second operation, displaying, by the first subdevice, a first setting interface, wherein the first setting interface is used to set volume of the earphones; or
detecting, by the first device, a third operation of the user; and
in response to the third operation, displaying, by the first subdevice, a second setting interface, wherein the second setting interface is used to set a noise canceling mode of the earphones.

16. A call control method, applied to a first device, wherein the first device comprises a first subdevice and earphones, the first subdevice establishes a first communication connection to the earphones, the earphones establish a second communication connection to a second device, the first subdevice stores a first call record, the first call record is a call record of the second device, and the method comprises:
detecting, by the first subdevice, a first operation of a user on the first call record, wherein the first operation is used to make an outgoing call to a first number corresponding to the first call record;
in response to the first operation, sending, by the first subdevice, a first message to the earphones based on the first communication connection, wherein the first message indicates the second device to make an outgoing call to the first number;
sending, by the earphones, a second message to the second device based on the second communication connection, wherein the second message indicates the second device to make an outgoing call to the first number; and
receiving and playing, by the earphones based on the second communication connection, call audio of the outgoing call from the second device to the first number.

17. A call control method, applied to a first device, wherein the first device comprises a first subdevice and earphones, the first subdevice establishes a first communication connection to the earphones, the first subdevice establishes a second communication connection to a second device, the first subdevice stores a first call record, the first call record is a call record of the second device, and the method comprises:
detecting, by the first subdevice, a first operation of a user on the first call record, wherein the first operation is used to make an outgoing call to a first number corresponding to the first call record;
in response to the first operation, sending, by the first subdevice, a first message to the earphones based on the first communication connection, wherein the first message comprises device information of the second device;
establishing, by the earphones, a third communication connection to the second device based on the device information of the second device;
sending, by the first subdevice, a second message to the second device based on the second communication connection; or sending, by the earphones, the second message to the second device based on the third communication connection, wherein the second message indicates the second device to make an outgoing call to the first number; and
receiving and playing, by the earphones based on the third communication connection, call audio of the outgoing call from the second device to the first number.

18. A call control method, applied to a first device, wherein the first device comprises a first subdevice and earphones, earphone slots accommodating the earphones are disposed in the first subdevice, the earphones are located in the earphone slots, the first subdevice establishes a first communication connection to a second device, the first subdevice establishes a second communication connection to the earphones, the first subdevice stores a first call record, the first call record is a call record of the second device, and the method comprises:
detecting, by the first subdevice, a first operation of a user on the first call record, wherein the first operation is used to make an outgoing call to a first number corresponding to the first call record;
in response to the first operation, sending, by the first device, a first message to the earphones based on the second communication connection, wherein the first message comprises device information of the second device;
detecting, by the earphones, that the earphones are taken out of the earphone slots, and establishing, by the earphones, a third communication connection to the second device based on the device information of the second device;
detecting, by the earphones, a second operation of the user;
in response to the second operation, sending, by the earphones, a second message to the second device based on the third communication connection, wherein the second message indicates the second device to make an outgoing call to the first number; and
receiving and playing, by the earphones based on the third communication connection, call audio of the outgoing call from the second device to the first number.

19. An upgrade method, applied to a first device, wherein the first device comprises a first subdevice and earphones, the first subdevice establishes a communication connection to the earphones, and the method comprises:
detecting, by the first subdevice, an operation of triggering an upgrade by a user;
in response to the operation, determining, by the first subdevice, whether the earphones satisfy an upgrade condition, and if the earphones satisfy the upgrade condition, sending, by the first subdevice, a first message to the earphones based on the communication connection, wherein the first message comprises an upgrade package; and
starting, by the earphones, an upgrade based on the upgrade package.

20. The method according to claim 19, wherein earphone slots accommodating the earphones are disposed in the first subdevice, and the determining, by the first subdevice, whether the earphones satisfy an upgrade condition specifically comprises:
determining, by the first subdevice, whether the earphones are in the earphone slots, and/or whether a battery level of the earphones exceeds a preset threshold.

21. The method according to claim 19 or 20, wherein after the starting, by the earphones, an upgrade based on the upgrade package, the method further comprises:
starting, by the first subdevice, the upgrade.

22. A music playback method, applied to a first device, wherein the first device comprises a first subdevice and earphones, and the method comprises:
detecting, by the first subdevice, an operation of playing a first song by a user;
in response to the operation, determining, by the first subdevice, whether the first subdevice establishes a first communication connection to the earphones; and
if the first subdevice establishes the first communication connection to the earphones, sending, by the first subdevice, first audio data to the earphones, wherein the first audio data is used by the earphones to play the first song; or
if the first subdevice does not establish the first communication connection to the earphones, displaying, by the first subdevice, first prompt information, wherein the first prompt information prompts the user to establish the first communication connection between the earphones and the first subdevice.

23. An electronic device, wherein the electronic device is a first device, the first device comprises a first subdevice and earphones, earphone slots accommodating the earphones are disposed in the first subdevice, the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 6, 7 to 9, 10 and 11, 12 to 15, 16, 17, 18, 19 to 21, or 22.

24. A computer storage medium, wherein the computer storage medium stores a computer program, the computer program comprises program instructions, and when the program instructions are run on an electronic device, the electronic device is enabled to perform the method according to any one of claims 1 to 6, 7 to 9, 10 and 11, 12 to 15, 16, 17, 18, 19 to 21, or 22.
